# EUROPEAN PATENT SPECIFICATION

(11) **EP 3 392 031 B1**
(45) Date of publication and mention of the grant of the patent: **04.03.2020**
(21) Application number: 17397510.3
(22) Date of filing: 21.04.2017
(51) Int. Cl.: B32B 5/02, B32B 5/06, B32B 7/06, B32B 7/12, B32B 21/04, B32B 21/08, B32B 21/10, B32B 21/14, B32B 27/06, B32B 27/30, B32B 27/36, B32B 27/38, B32B 27/40, B32B 27/42, B32B 29/02, B32B 29/06, B32B 3/30, B60R 1/00

(54) **A PLYWOOD PANEL AND A METHOD FOR MANUFACTURING THE SAME**
SPERRHOLZPLATTE UND VERFAHREN ZUR HERSTELLUNG DAVON
PANNEAU DE CONTREPLAQUÉ ET SON PROCÉDÉ DE FABRICATION

(43) Date of publication of application: 24.10.2018
(73) Proprietor: UPM Plywood Oy, 15140 Lahti (FI)
(72) Inventor: MARTTILA, Heikki, 00610 Helsinki (FI); TILLI, Mikko, 15870 Hollola (FI)
(74) Representative: Berggren Oy, Tampere

(56) References cited:
- EP-A1- 2 749 408
- WO-A2-2006/102190

## Description

### Technical field

This invention relates to plywood panels. This invention relates to water repellent plywood panels intended for adhesive attachment to an object, such as a frame of a vehicle or a trailer. In some embodiments, the surface to be bonded, i.e. bondable surface, is protected with a removable protective layer. This invention relates to water repellent plywood panels, of which surface, after the removal of said protective layer, is forms a strong bond with many adhesives.

### Background

Plywood panels are known. Such panels can be bonded to frames with adhesive. Often the use environment of the panel is moist, whereby the surface of the panel that is bonded is also waterproof. Waterproofing can be made e.g. by suitable polymer coating, such a phenol-formaldehyde coating. However, waterproofing materials typically do not have good adhesion to many adhesives. This is particularly true for regular phenol-formaldehyde coatings, which include a lot of release agents for manufacturing reasons.

Moreover, often plywood panels become dirty, i.e. soil, during transportation or during manufacturing. To have a strong bond with the adhesive, the surface to be bonded should be clean. In the field of panels, it is known to use a removable protective foil to protect the surface of the panel in order to avoid cleaning before adhesive bonding.

### Summary

The embodiments of the invention relate to plywood panels having a waterproofing layer of which a surface is bondable to an object by using some adhesive. The bondable surface is designed to improve the attachment between the adhesive and the bondable surface.

The bondable surface is protected by a protective layer, of which at least a layer is not vapour impermeable, i.e. is vapour permeable or semi-permeable. Because of the protective layer, the panel comprises an interface, which, after exposing, forms such a bondable surface. It has been noticed that the vapour permeability or semi-permeability of at least a part of the protective layer improves the bondability of the bondable surface.

Embodiments of the invention are disclosed in the claims and the description.

### Brief description of the drawings

- Fig. 1a: shows, in a perspective view, a plywood panel,
- Fig. 1b: shows, in a side view, a plywood panel having a waterproofing layer,
- Fig. 1c: shows, in a side view, a plywood panel having a waterproofing layer covered with a protective layer,
- Fig. 1d: shows, in a side view, the removal of the protective layer from the plywood panel according to Fig. 1c,
- Fig. 1e: shows, in a side view, a plywood panel,
- Fig. 1f: shows, in a side view, adhesion strengths between some layers of a plywood panel,
- Fig. 2a: shows, in a side view, attaching a panel to a structure by using adhesive,
- Fig. 2b: shows, in a side view, the removal of the protective layer from the a panel and attaching a structure to the exposed surface, i.e. bondable surface, by using adhesive,
- Fig. 2c: shows, in a side view, the removal of two protective layers from the panel of Fig. 1e, and attaching two structures to the exposed areas by adhesive,
- Figs. 3a and 3b: show, in a principal view, measurement of surface energy of a bondable surface of a waterproofing layer,
- Fig. 4a: shows an exposed and bondable surface, the bondable surface being rough, and a protective layer,
- Fig. 4b: shows the bondable surface and the protective layer of Fig. 4a in more detail,
- Fig. 5a: shows, in a top view, a protective layer,
- Fig. 5b: shows, in a side view, a plywood panel and a detailed structure of the protective layer thereof,
- Fig. 5c: shows, in a side view, a plywood panel and a detailed structure of the protective layer thereof,
- Fig. 6a: shows, in a side view, hot pressing a stack of veneers to form an uncoated plywood panel,
- Fig. 6b: shows, in a side view, arranging a waterproofing layer onto a first side of an uncoated plywood panel and an abrasion resist layer onto a second side of the uncoated plywood panel, and hot pressing the stack to form a coated plywood panel,
- Fig. 6c: shows, in a side view, arranging a protective layer onto a waterproofing layer, and hot pressing the stack to form a coated and protected plywood panel,
- Fig. 6d: shows, in a side view, arranging a waterproofing layer onto a first side of an uncoated plywood panel, a protective layer onto the waterproofing layer, and an abrasion resist layer onto a second side of the uncoated plywood panel, and hot pressing the stack to form a coated and protected plywood panel,
- Figs. 6e and 6f: show, in a side view, a use of a mesh, such as a wire mesh, to increase the surface roughness of the bondable surface of the waterproofing layer,
- Fig. 6g: shows, in a side view, hot pressing a stack of veneers, a waterproofing layer, and a protective layer to form a coated and protected plywood panel,
- Fig. 6h: shows, in a side view, hot pressing a stack of veneers and a waterproofing layer to form a coated panel,
- Fig. 7a: shows, in a top view, a flooring of a vehicle or trailer, and
- Fig. 7b: shows, in an end view, a flooring of a vehicle or trailer.

### Detailed description

Plywood panels are known. A surface of a plywood panel may be exposed to humidity. The humidity may be absorbed to the plywood panel as moisture. Moisture e.g. swells the plywood panel and in this way deteriorates its properties. To improve moisture resistance plywood panels have been coated with a waterproofing coating. The known coatings used for plywood panels include a phenol-formaldehyde coating with release agents. Release agents are used in solutions of prior art to improve the release of the panel from a hot-pressing apparatus. However, the release agents reduce the surface energy of the plywood panel thereby decreasing the adhesion strength when bonded with adhesive.

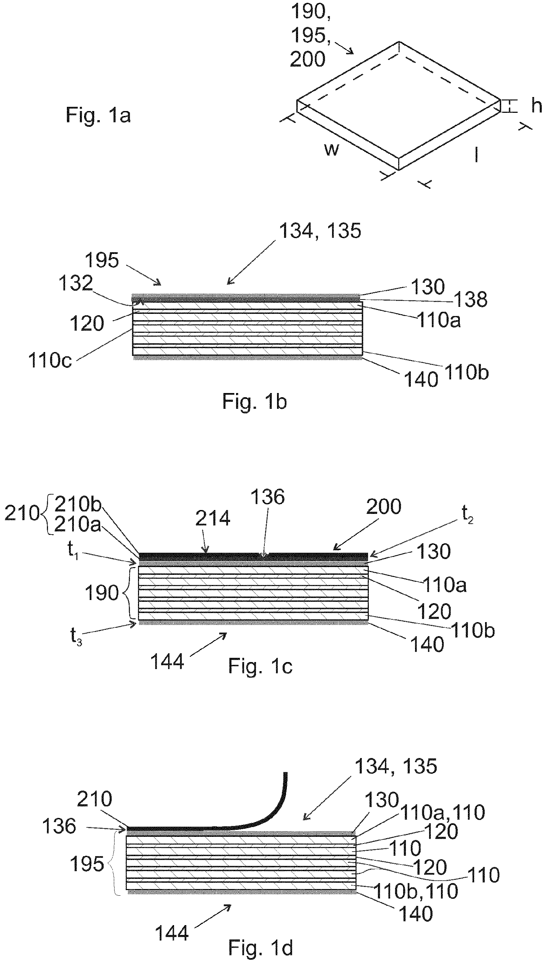

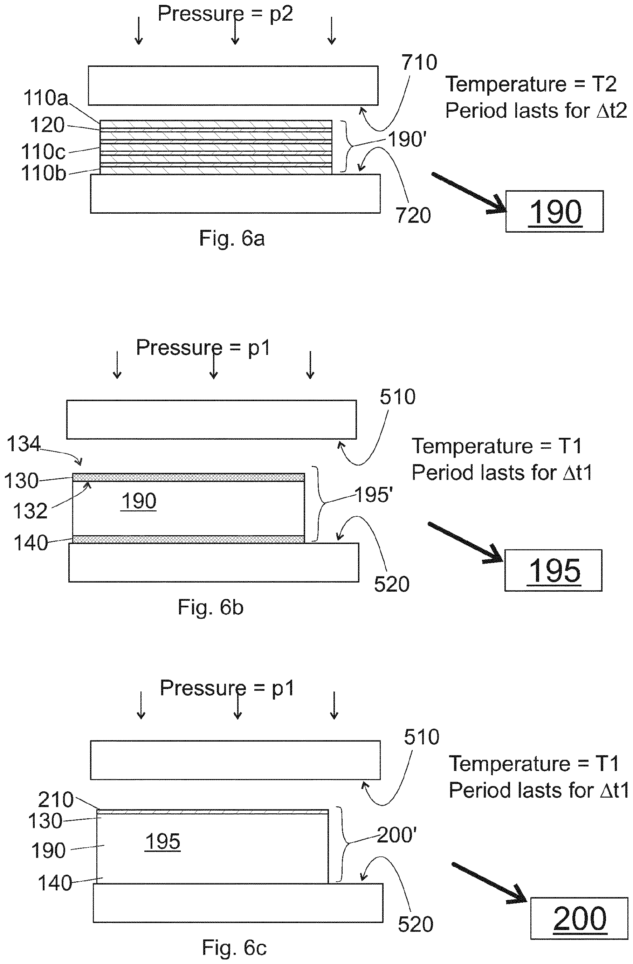

Figure 1a shows, in a perspective view, a plywood panel 190, 195, 200. Unless otherwise specified or inferred from context, an uncoated plywood panel will be referred to by the reference numeral 190. A coated plywood panel having a waterproofing layer is denoted by the numeral 195 or 200. A coated plywood panel 195, 200 may be further protected by a protective layer, in which case the coated and protected panel is referred to by the numeral 200. A coated plywood panel without a protective layer is referred to by the numeral 195. However, a coated plywood panel 195 may further comprise the protective layer 210. Such panels may be manufactured by hot pressing, e.g. as indicated in Figs. 6a to 6h.

The dimensions of the plywood panel (190, 200, 195) are depicted in the figure 1a. Typically the width w is from 10 cm to 15 m. Typically the length I is from 10 cm to 15 m. In this way, the surface area of the largest surface of the panel is typically from 0.01 m² to 100 m², such as from 0.1 m² to 10 m². Thickness h refers to the smallest of the three orthogonal dimensions of the panel. Typically the thickness h is from 0.5 mm to 150 mm. These typical measures apply to a coated and protected plywood panel 200, to an uncoated plywood panel 190, and to a coated plywood panel 195.

The size of the panel depends on the manufacturing phase. In a typical manufacturing process large panels are initially manufactured by hot pressing. Thereafter, the large panel is sawed to smaller panels according to their intended use.

After sawing, for some uses the length I of the plywood panel (190, 200, 195) may be e.g. from 2 m to 4 m. The width w of the panel may be e.g. at least 20 cm, such as from 40 cm to 120 cm, such as about 60 cm or about 100 cm. This applies for use in flooring. For some other uses the length I may be e.g. at least 600 mm. In this way, the surface area of the largest surface of the plywood panel may be from 0.1 m² to 4 m², such as from 1.2 m² to 2 m². A plywood panel (190, 200, 195) may also be smaller of larger, as discussed above, depending on the manufacturing phase and/or the use of the panel.

Referring to Figs. 1b and 1c, a coated plywood panel 195 or a coated and protected plywood panel 200 comprises veneer layers 110 (such as 110a, 110b, 110c). The panel 195, 200 comprises at least a first veneer layer 110a and a second veneer layer 110b. Throughout this description, a veneer layer refers to a layer of the plywood panel, the layer comprising wood. The plywood panel comprises also other layers, such as a layer of adhesive 120 (i.e. first adhesive) in between two veneer layers 110. A veneer layer 110 (e.g. 110c) is arranged in between two layers of adhesive 120, except for the topmost 110a and bottommost 110b veneer layers. Hereinafter, unless otherwise stated, the first veneer layer 110a is not left in between two veneers layers 110 of the coated plywood panel 195, 200. In other words, the first veneer layer 110a is a topmost (or bottommost) veneer layer of the panel 195, 200; however it is coated with at least a waterproofing layer 130. Hereinafter, unless otherwise stated, the second veneer layer 110b is not left in between two veneers layers 110 of the coated plywood panel 195, 200. In other words, the second veneer layer 110b is a bottommost (or topmost) veneer layer; however it may be coated with another layer or other layers (140, 220).

The coated plywood panel 195, 200 comprises a waterproofing layer 130. A purpose of the waterproofing layer 130 is to increase the waterproofness of the coated plywood panel. The waterproofing layer 130 serves as a coating and protects the panel 195, 200 from moisture. The waterproofing layer 130 is attached to a topmost veneer layer, i.e. the first veneer layer 110a. Referring to Fig. 6b, the waterproofing layer 130 has a first side 132 and a second side 134. The first 110a and the second 110b veneer layers are arranged on the first side 132 of the waterproofing layer 130.

Another purpose of the waterproofing layer 130 is to form a bondable surface 135, i.e. a surface that bonds well to other objects, when bonded with adhesive. Referring to Fig. 1b, the first side 132 is attached to first veneer layer 110a. The second side 134 of the waterproofing layer 134 is intended for an adhesive attachment. In the embodiment of Fig. 1b, the second side 134 forms a bondable surface 135. The thickness of the waterproofing layer 130 is denoted by t₁ (see Fig. 1c); and is referred to as a first thickness.

Often plywood panels become dirty, i.e. soil, during transportation or during manufacturing. When adhesively attaching plywood panels, the dirt should be removed prior the intended use. Cleaning, i.e. removing the dirt, may slow down the process where such panels are used. Therefore, preferably, the bondable surface 135 is covered by a removable protective layer 210. The thickness of the removable layer 210 is denoted by t₂ (see Fig. 1c); and is referred to as a second thickness.

When the panel 200 comprises the protective layer 210, the waterproofing layer 130 extends to an intersection 136 of the waterproofing layer 130 and the protective layer 210. I.e. no other material layers are left in between the layers. When the panel 195 is free from the protective layer 210, the waterproofing layer 130 forms a bondable surface 135 on the panel 195. Preferably, the waterproofing layer 130 comprises polymer based material. In an embodiment, the waterproofing layer 130 consists of polymer based material or polymer based materials.

In order to function well with many adhesives, the bondable surface 135 is rough. In an embodiment, the roughness Ra of the bondable surface 135 is at least 3 µm, such as from 3 µm to 15 µm, as measured according to the standard ISO 4288:1996. It has been found that suitable roughness can be achieved by using a protective layer 210 that [a] is not vapour impermeable or [b] comprises a layer that is not vapour impermeable. Preferable the protective layer 210 that is not vapour impermeable. Vapour permeability or semi-permeability has two advantages: (1) permeability allows for gases to escape through the protective layer 210 (or at least into the protective layer), whereby the protective layer 210 firmly bonds to the waterproofing layer 130. Moreover, (2) the material of the waterproofing layer 130 can also permeate into the protective layer 210. Thus, upon removal of the protective layer 210, the revealed bondable surface 135 is rough. The material of the waterproofing layer 130 can also permeate into the protective layer 210 at least if the waterproofing layer 130 comprises resin and/or thermoplastic polymer having a reasonably low melting point, e.g. at most 200 °C, at most 180 °C, or most 160 °C. The level of resistance against permeability may be characterized e.g. by a sd value, as will be detailed below. The sd value is inversely proportional to the vapour permeability.

In order to function well with many adhesives, the surface energy of the bondable surface 135 is preferably high. The relative term high will be discussed in detail below. Moreover, in order for the waterproofing layer to withstand the mechanical stress resulting from adhesive bonding and use of the panel, the adhesion strength between the waterproofing layer 130 and the first veneer layer 110a is preferably high. The relative term high will be discussed in detail below.

Referring to Fig. 1c, a coated and protected plywood panel 200 comprises the layers of the coated plywood panel 195 as discussed above and in connection with Fig. 1b. In addition, the coated and protected plywood panel 200 comprises a removable protective layer 210. Referring to Figs. 1c and 1d, such a coated and protected panel 200 comprises an interface 136 which, after exposing, forms a bondable surface 135. The bondable surface 135 can be exposed by removing the protective layer 210 as indicated in Fig. 1d. The protective layer 210 is arranged to delaminate from the waterproofing layer 130, by proper selection of a second adhesion strength σ₂ for the attachment between these layers. On one hand, preferably the protective layer 210 is removable from the waterproofing layer 130 with fingers (i.e. without tools). This correspond to an adhesion strength σ₂ of at most 1.5 N/mm, preferably at most 0.9 N/mm. On the other hand, preferably the adhesion strength σ₂ is not too low to ensure stacking of multiple panels to a pile. If the second adhesion strength was very low, the protective layers 210 could be ripped off when stacking panels 200 onto each other. Thus, in some embodiments the second adhesion strength σ₂ is at least 0.05 N/mm, or at least 0.1 N/mm. These values are measured as defined in the standard ISO 4578 (referring to the latest public version on 20^{th} December 2012).

Also in this case, the surface energy of the bondable surface 135 is preferably high. Also in this case the adhesion strength between the waterproofing layer 130 and the first veneer layer 110a is high.

In an embodiment (of a panel 195 or a panel 200) the surface energy of the bondable surface 135 is at least 34 mN/m according to standard ISO 8296:2003(E). Preferably, the surface energy of the bondable surface 135 is at least 40 mN/m according to standard ISO 8296:2003(E). For the test environment the standard refers to ISO 291.

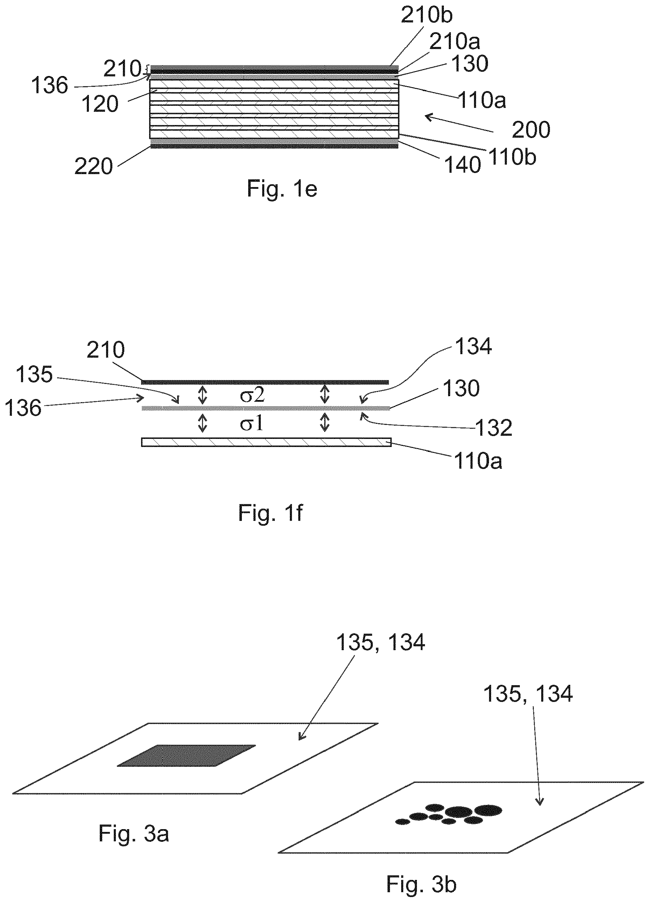

To measure the surface energy according to standard ISO 8296:2003(E), a layer of test liquid is applied onto the bondable surface 135 as indicated in Fig. 3a. The layer of the test liquid should form droplets, as indicated in Fig. 3b, in 2 seconds. If not, the content of the test liquid varied to prolong or shorten the time to form droplets. For further details the reader is referred to the standard.

Referring to Fig. 1f, the coated panel 195, 200 has a first adhesion strength σ1 in between the waterproofing layer 130 and the first veneer layer 110a. When the second side 134 of the waterproofing layer 130, i.e. the bondable surface 135, is bonded to an object, the panel 195 is only bonded well, if the first adhesion strength if reasonably high. In an embodiment, the first adhesion strength σ1 is more than 2.0 N/mm, measured according to the standard ISO 4578:2012. Preferably the first adhesion strength σ1 is more than 10 N/mm, measured according to the standard ISO 4578:2012. It is also possible that the first adhesion strength σ1 is so high that it is not measurable by the test of the standard ISO 4578:2012. Alternatively, it is possible to measure the soundness of the panel 195, 200 comprising the waterproofing layer 130 by the standard EN311:2002. Correspondingly, in an embodiment, the first adhesion strength σ1 is at least 2 N/mm², more than 2 N/mm², or more than 2.5 N/mm² as measured according to the standard EN311:2002.

Furthermore, when the panel 200 comprises the protective layer 210, the first adhesion strength σ1 and the second adhesion strength σ2 may be selected such that the first adhesion strength σ1 is greater than the second adhesion strength σ2. Either the ISO 4578:2012 or EN311:2002 can be used to measure both σ1 and σ2. For example, the first adhesion strength σ1 and the second adhesion strength σ2 may be selected such that at most 5 % of the waterproofing layer 130 delaminates from the first veneer layer 110a by the tearing the protective layer 210 from the waterproofing layer 130. In an embodiment, not even a part of the waterproofing layer 130 delaminates from the first veneer layer 110a by the tearing the protective layer 210 from the waterproofing layer 130.

Referring to Figs. 1c, 1d, and 1f, the protective layer 210, if used, should be removable from the waterproofing layer 130. When the panel 200 comprises the protective layer 210, an interface 136 is left in between the second side 134 of the waterproofing layer 130 and the protective layer 210. In this way, the coated and protected panel 200 has a second adhesion strength σ2 in between the protective layer 210 and the waterproofing layer 130. In order for the protective layer 210 to be removable, in an embodiment, the first adhesion strength σ1 is greater than the second adhesion strength σ2. Herein the removability refers to removability by peeling or tearing the protective layer 210.

Preferably, the protective layer 210 is removable by hand. In such a case, the second adhesion strength σ2 is reasonably low. However, the protective layer 210 should remain on the panel 195 during e.g. manufacturing, whereby the second adhesion strength should not be insignificant. In a preferred embodiment, the second adhesion strength σ2 is from 0.05 N/mm to 1.5 N/mm, such as from 0.1 N/mm to 0.9 N/mm. The values of the second adhesion strength correspond to release force measurements. The release force measurements are described in the standard ISO 4578 (referring to the latest public version on 20^{th} December 2012). The adhesion strengths σ1, σ2 may be affected by the selection of materials and/or the process parameters. In an embodiment, wherein the adhesion between the protective layer 210 and the waterproofing layer 130 is achieved during hot pressing, the temperature during hot pressing affects the adhesion strength σ₂. Generally the higher the process temperature, the higher the second adhesion strength σ₂.

It has also been found that the roughness of the bondable surface improves the bonding. Thus, in an embodiment, the bondable surface 135 has an average surface roughness Ra of at least 3 µm, such as from 3 µm to 15 µm, as measured according to the standard ISO 4288:1996. Measurements according to the standard may be performed by e.g. the device Innovatest TR-110.

The surface roughness may improve the bondability also in cases where the surface energy of the bondable surface is not high in the aforementioned sense. Examples of such embodiments are indicated e.g. as the appended numbered examples 7 to 9.

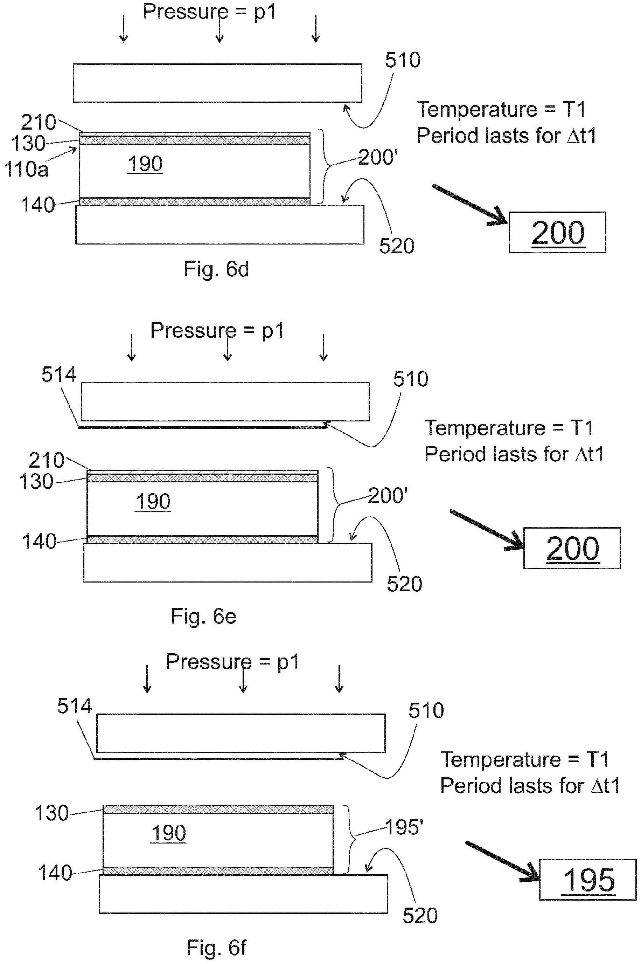

Such a rough surface may be obtained e.g. by using a vapour permeable or semipermeable protective layer 210. Moreover, roughness can be increased by at least two other ways, which are not mutually exclusive. First, referring to 6e, a mesh 514, such as a wire mesh 514, can be used in between a primary first pressing surface 510 and the protective layer 210. Thus, the pattern of mesh 514 will be duplicated onto the protective layer 210 and through the protective layer 210 to the waterproofing layer. As indicated in Fig. 6f, a wire mesh 514 can be used even if a protective layer 210 is not used. Moreover, instead of a wire mesh 514, a patterned plate 514 having protrusions and/or indentations can be used to increase the roughness. In general, any kind of a patterning plane 514 can be used for the purpose. Second, when a protective layer 210 is used, the protective layer itself may be uneven in such a way that the protective layer 210 will pattern the bondable surface 135 even if the protective layer 210 is pressed only with a smooth pressing surface 510, as in Fig. 6d. For example, the protective layer 210 may comprise a scrim or other fibrous material.

In addition to the roughness in the micrometre scale, as evidenced by the Ra value, roughness at a smaller length scale can be described by a value of gloss. The gloss indicates, how well a surface, such as the bondable surface 135, reflects light. Also the roughness as the smaller length scale can improve bondability of the bondable surface 135. In an embodiment, the bondable surface 135 has a gloss of at most 7 GU, such as from 1 GU to 7 GU, as measured according to the standard ISO 2813:2014 at an angle of 60 degrees. For the measurements, e.g. the device Elcometer 406 can be used. Herein the bondable surface 135 refers to the surface of the (only) coated panel 195 or the surface 135 exposed by the removal of the protective layer 210 from a coated an protected panel 200. In addition, the gloss may refer to the gloss of the surface of the second side 134 of the waterproofing layer 130 in the method for manufacturing the panel 195, 200 (i.e. before the waterproofing layer 130 has been attached to the veneer layer 110a of the panel). However, the gloss may change in the process of manufacturing the panel.

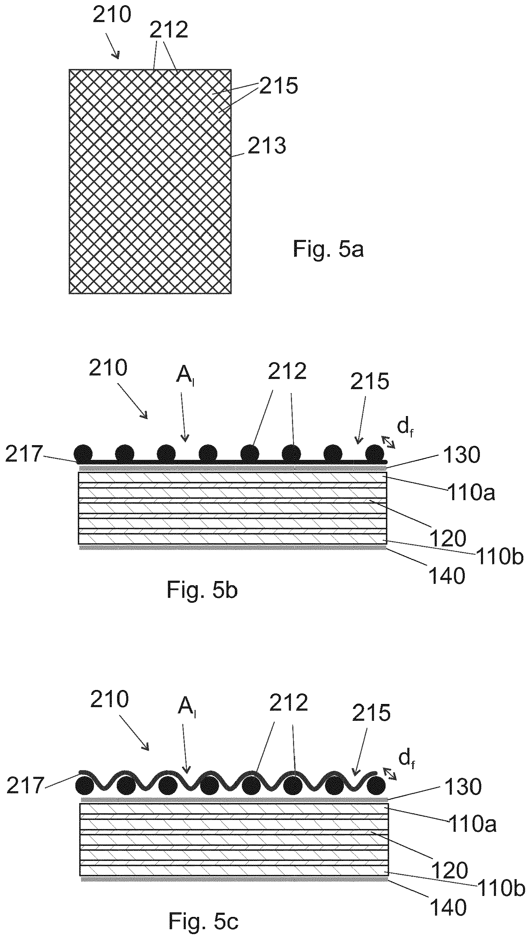

Referring to Figs. 5a to 5c, for these reasons, in an embodiment, the protective layer 210 comprises fibres 212, such as a scrim 213 of polymer fibres 212 or a felt of polymer fibres. In an embodiment, indentations 215 are left in between the polymer fibres 212. However, indentations 215 may be hard to identify from a felt of polymer fibres. Even if such indentations were hard to identify, the fibres 212 as such help to improve the roughness of the exposable (i.e. bondable) surface 135.

In an embodiment, an average diameter d_{f} of the polymer fibres 212 of the protective layer 210 is from 50 µm to 3 mm, such as from 0.1 mm to 2 mm. Such diameters have been found to improve the surface roughness on a suitable length scale in view of adhesive bonding. In an embodiment, an average cross-sectional area Aₗ of the indentations in between the fibres 212 is from 0.1 mm² to 5 mm². The average cross-sectional area refers to the average are of the cross sections of the indentations 215, as seen from the direction of the thickness h of the panel 200 (see Fig. 1a).

In an embodiment, the protective layer 210 further comprises a polymer film 217. As indicated in Figs. 5b and 5c, the film 217 can be arranged on either side of the polymer fibres 212. Preferably, the polymer film 217 of the protective layer 210 is left in between the waterproofing layer 130 and at least some of the polymer fibres 212 of the protective layer 210, as indicated in Fig. 5b. Even if not shown in the figures, the protective layer 210 may further comprise other layers, such as a supporting layer, e.g. a supporting layer comprising natural fibres, such as a supporting paper layer. In an embodiment, the protective layer 210 comprises paper, such as siliconized paper. In an embodiment, the protective layer 210 consists of paper, such as siliconized paper.

In an embodiment, the protective layer 210 comprises thermoplastic polymer. This has the effect that the protective layer 210 adheres well to the waterproofing layer 130 in a hot pressing process. The melting temperature of the thermoplastic material of the protective layer 210 may be e.g. less than 230 °C, such as at most 200 °C or at most 160 °C. The melting temperature of the thermoplastic material of the protective layer 210 may be e.g. more than 100 °C, such as at least 130 °C. A material can be considered to be heat resistant up to its glass transition temperature or melting point, whichever is lower, provided that the material has at least one of a glass transition temperature and a melting point. In other cases, a material can be considered to be heat resistant up to a decomposition temperature or a flash point. In some embodiments the protective layer 210 is heat resistant to all temperatures below 200 °C, e.g. temperatures from -55 °C to 200 °C. Preferably at least part of the protective layer 210 is heat resistant to temperatures up to 160 °C. Preferably at least part of the protective layer 210 is heat resistant to temperatures up to 145 °C. The resistance to heat is preferred in order to protect the hot pressing device from the first polymer layer 130, as discussed above. For example, the protective layer 210 may comprise a first sub-layer 210a of synthetic polymer and a second sub-layer 210b of paper, which is heat resistant. The paper sub-layer 210b may be arranged to face, in a hot pressing process, a primary first pressing surface 510 (see Figs. 6c to 6e). The second sub-layer 210b may comprise siliconized paper. The first sub-layer 210a may comprise synthetic polymer fibres. The first sub-layer 210a may comprise polyethylene fibres. The first sub-layer 210a may comprise high density polyethylene fibres. The fibrous polymer material of the first sub-layer 210a may have a melting point of from 110 °C to 140 °C, such as from 130 °C to 140 °C. The first sub-layer 210a may have an sd value of at most 1 m or at most 0.5 m at the temperature 23 °C according to the standard ISO 12572:2001. Unless otherwise indicated, the measurements environment has a temperature 23 °C, a pressure 1 atm, and a relative humidity from 50 % to 93 % (i.e. 50 % for dry cup side and 93 % for wet cup side in the standard ISO 12572:2001; set condition "C", point 7.1). However, such values are typically applicable also for other test conditions of the standard (A, B, or D). The first sub-layer 210a may have a specific mass of from 20 g/m² to 120 g/m², such as from 30 g/m² to 90 g/m². The sd value of the second sub-layer 210b may be e.g. at most 1.5 m or at most 0.7 m according to the standard ISO 12572:2001. Moreover, the specific mass of the second sub-layer may be e.g. in the range from 40 g/m² to 120 g/m². Thus, in a preferred embodiment, the sd value of the whole protective layer is at most 2.5 m, such as at most 1.2 m according to the standard ISO 12572:2001.

As indicated, in an embodiment of a manufacturing method, the protective layer 210 comprises a first sub-layer 210a having a first vapour permeability and a second sub-layer 210b having a second vapour permeability; the first sub-layer 210a is arranged in between the second sub-layer 210b and the waterproofing layer 130; and the first vapour permeability is greater than the second vapour permeability. In units of perms, which are given by 3.27/sd, the vapour permeability of the first sub-layer may be e.g. at least 3.3 perms or at least 6.6 perms; and the vapour permeability of the second sub-layer may be e.g. at least 2 perms or at least 5 perms.

In an preferred embodiment, the plywood panel 200 comprises a vapour permeable of semi-permeable protective layer 210. However, at least in principle, it might be possible to cover the protective layer 210 with a vapour impermeable layer. However, also in that case, a vapour permeable sub-layer (e.g. 210a) of the protective layer 210 would be left in between the impermeable layer (e.g. 210b) and the waterproofing layer 130.

Referring to Fig. 1c, in an embodiment, the protective layer 210 comprises at least a first sub-layer 210a of a first material and a second sub-layer 210b of a second material. The first sub-layer 210a is arranged in between the first polymer layer 130 and the second sub-layer 210b of the second polymer layer 210. In an embodiment, the material of the second sub-layer 210b is more heat resistant than the material of the first sub-layer 210a. This has the effect, that during manufacturing, the second sub-layer 210b protects the pressing surface 510, and the first sub-layer 210a attaches well to the waterproofing layer 130. For example, in Fig 5b, the glass transition temperature of the film 217 (corresponding to the first sublayer 210a of Fig. 1c) can be lower than the glass transition temperature of the fibres 212 (corresponding to second sublayer 210b of Fig. 1c). In the alternative, the fibres may have been made of material not having a glass transition temperature, e.g. paper. As indicated above, the protective layer 210 may consist of a single layer or the protective layer 210 may comprise a first sub-layer. In both cases, the protective layer comprises a layer of material extending to the interface 136.

The protective layer 210 may comprise e.g. paper and polymer. In an embodiment, the protective layer 210 is a layered structure comprising a first sub-layer comprising polymer and a second sub-layer comprising paper. The protective layer 210 may be arranged in the panel 200 such that the first sub-layer 210a of the second polymer layer 210 faces the first polymer layer 130. In an embodiment, the surface energy of the material of the second sub-layer 210b is less than the surface energy of the first sub-layer 210a as measured according to standard ISO 8296:2003(E). In a preferable embodiment, the surface energy of the material of the first sub-layer 210a is less than the surface energy of the second sub-layer 210b according to standard ISO 8296:2003(E). This has the effect that the protective layer 210 is more easily removable from the waterproofing layer 130.

In an embodiment, the material (or materials) of the protective layer 210 is selected such that the protective layer 210 does not delaminate spontaneously from the waterproofing layer 130 after a hot press process. Properties that affect this include the thermal expansion coefficient of the material of the protective layer 210 as well as the adhesion strength σ₂ between the protective layer 210 and the waterproofing layer 130.

In an embodiment, the protective layer 210 comprises at least one of polypropylene (PP), maleic anhydride polypropylene (MAPP), polyethylene (PE), maleic anhydride polyethylene (MAPE), and polyamide (PA).

In an embodiment, the protective layer 210 comprises polypropylene and/or polyethylene. In an embodiment, the protective layer 210 comprises polypropylene and/or polyethylene fibres. In an embodiment, the protective layer 210 comprises high-density polyethylene (HDPE). In an embodiment, the protective layer 210 comprises high-density polyethylene (HDPE) fibres. In an embodiment, the protective layer 210 further comprises a layer of paper, optionally treated paper, such as siliconized paper.

The second polymer layer 210 or part thereof may be siliconized in order to help the removal of the second polymer layer 210 from the first polymer layer 130. For example, the second polymer layer 210 may comprise a layer of siliconized paper.

In an embodiment, the second polymer layer 210 comprises a synthetic polymer felt and a synthetic polymer film. In an embodiment, the synthetic polymer felt has a specific mass of from 40 g/m² to 100 g/m² and the synthetic polymer film has a specific mass of from 15 g/m² to 35 g/m². The synthetic polymer may be e.g. polypropylene or polyethylene, preferably polypropylene. In addition, the second polymer layer 210 may comprise a substrate comprising natural fibres, such as a paper substrate. In total, the specific mass of protective layer 210 may be e.g. from 10 g/m² to 500 g/m², such as from 20 g/m² to 250 g/m². The thickness t₂ (i.e. second thickness) of the protective layer may be e.g. from 10 µm to 500 µm. Preferably, the synthetic polymer film is perforated to increase vapour permeability.

The protective layer 210 is permeable to vapour and/or moisture. This is because curing of the material of some waterproofing layers 130 produces water. For example water is produced by hardening some resins, in particular phenol formaldehyde resin. To enable the water thus produced to evaporate from the waterproofing layer 130, the protective layer 210 is preferably permeable to vapour and/or moisture. In an embodiment, the protective layer 210 layer has vapour permeability equal to an s_{d} value of at most 5 m at 23 °C according to the standard ISO 12572:2001. In an embodiment, the protective layer 210 layer has vapour permeability equal to an s_{d} value of at most 3 m or at most 1.5 m at 23 °C according to the standard ISO 12572:2001. In a panel 200 these values refer to the vapour permeability of the layer 210 after removal from the panel 200. However, in a method for manufacturing the panel 200, these values refer to the vapour permeability of the layer 210 before attaching it to the waterproofing layer 130.

In addition it has been found that the vapour permeability of the protective layer 210 increases the roughness of the bondable surface 135, probably, since some of the material of the waterproofing layer 130 may permeate into the vapour permeable protective layer 210.

The properties of the protective layer 210, when being a removable part of the panel 200, as discussed above, are applicable also for the properties of the of the protective layer 210 used in a method for manufacturing the panel 200, i.e. before the panel 200 has been manufactured. Other details of the method will be discussed below.

Moreover, when the protective layer 210 layer is used to increase the roughness of the bondable surface 135, the roughness of the surface 214 of the protective layer 210 of the panel 200 (see Fig. 1c) before removal the protective layer 210 may be reasonably high. In an embodiment, before removal of the protective layer 210, the surface 214 of the protective layer 210 has an average surface roughness Ra of at least 3 µm as measured according to the standard ISO 4288:1996. The average surface roughness Ra of the surface 214 may be from 3 µm to 15 µm.

As indicated above, preferably the material or materials of the waterproofing layer 130 is/are selected such that the second side 134 of the waterproofing layer 130, optionally after removal of a protective layer 210, has a surface energy of at least 34 mN/m or at least 40 mN/m according to standard ISO 8296:2003(E).

The waterproofing layer 130 itself may comprise sub-layers. For example some waterproofing material may be bonded to an uncoated plywood panel 190 (e.g. to a first veneer layer 110a thereof) with second adhesive 138, as indicated in Fig. 1b. Thus, the waterproofing layer may be considered to comprise at least the layer of second adhesive 138 and the other layer. In the alternative, the waterproofing layer 130 can be considered to have been bonded to the veneer 110a with the second adhesive 138. In either case, the waterproofing layer 130 may comprise sub-layers. If separate second adhesive 138 is used, preferably the panel 195, 200 comprises polymerized resin in between the first veneer layer 110a and the waterproofing layer 130 as the second adhesive 138. More preferably, if separate second adhesive 138 is used, preferably the panel 195, 200 comprises polymerized phenol formaldehyde resin in between the first veneer layer 110a and the waterproofing layer 130 as the second adhesive 138.

The material forming the bondable surface 135, i.e. the material of the second side 134 of the waterproofing layer 130 affects the surface energy of the bondable surface 135.

In an embodiment, the material of the second side 134 of the waterproofing layer 130 the material of the waterproofing layer 130 comprises
- polymerized resin, such as polymerized phenol formaldehyde resin and
- at most 1 wt% release agents.

In an embodiment, the bondable surface 135 is formed of such a material. It is also noted that at least some of the resin of the waterproofing layer 130 of a panel 195, 200 has been polymerized during manufacturing. However, when manufacturing a panel, resin that has not been polymerized may be applied. In an embodiment of a method for manufacturing the panel 190, 200, the material of the waterproofing layer 130 comprises
- resin suitable for polymerization, such as phenol formaldehyde resin and
- at most 1 wt% release agents.
The resin may have been impregnated in paper or cardboard substrate.

Release agents refers to agents that help to remove the panel 195, 200 from the hot pressing apparatus, in particular from the hot primary first pressing surface 510 and/or a patterning plane 514 (see Figs. 6a to 6f).

Examples of release agents include waxes (synthetic or natural), stearate (e.g. zinc stearate), esters (e.g. glycol stearate), anionic surfactants (i.e. tensides), and polar materials. In an embodiment, the material of the second side 134 of the waterproofing layer 130 the material of the waterproofing layer 130 comprises at most 1 wt% in total of these release agents.

Some materials have naturally a high surface energy. Examples of such materials include a metal such as aluminium, polyamide such as polyamide-66 or polyamide-6, and polyimide such as Kapton®. In an embodiment, the waterproofing layer 130 comprises at least one of these materials. In an embodiment, the bondable surface 135 is formed of any one of these materials in particular, if the panel 200 comprises the protective layer 210. However, in as an example, a panel 195 may be free from the removable protective layer 210 and the waterproofing layer 130 is free from metals.

The surface energy of the bondable surface 135 and/or the second side of the waterproofing layer 130 may have been increased by at least a treatment that increases surface energy. Examples of such treatments include corona treatment, flame treatment, ultraviolet treatment, mechanical treatment (e.g. by grinding, rubbing, or sanding) and chemical oxidation. More than one type of treatment may applied or may have been applied. Such treatment may be applied e.g. to the waterproofing layer 130 before attaching the layer to a panel 190; or after the waterproofing layer 130 has been attached to the panel 190, but before a protective layer 210 has been applied. Moreover, it is possible to apply a treatment to the layer 130 and attach both the layers 130 and 210 at the same time to a panel 190. Still further it is possible to apply a treatment to the layer 130, thereafter attach the protective layer 210 to the waterproofing layer 130; and thereafter attach a covering comprising both the waterproofing layer 130 and the protective layer 210 to the panel 190. Correspondingly, an embodiment of a method for manufacturing such a panel 195, 200 comprises treating at least the second side 134 of the waterproofing layer 130 by a treatment that increases the surface energy of the second side 134. Examples of such treatments were given above. The second side 134 may be treated before, after, or during attaching the first side 132 of the waterproofing layer 130 to the first veneer layer 110a.

In addition or alternatively, the surface energy of the bondable surface may be increased by using an additive material that increases the surface energy. Such and additive material may be selected e.g. from the group of resin, lignin, cellulose, natural fibres, titanium oxide, calcium carbonate, and hydrophilic additives. Such an additive material or materials may be applied on the second surface 134.

Preferably, the waterproofing layer 130 comprises natural fibres, such as cellulose fibres. As an example, the waterproofing layer 130 may comprise paper or cardboard. For example, a paper impregnated with suitable resin may be used as a waterproofing layer. Before manufacturing, substantially all the resin is polymerizable. However, during manufacturing at least some of the resin polymerizes. Thus, in the panel, at least some of the resin is polymerized. Typically, the resin comprises phenol formaldehyde resin. Moreover, phenol formaldehyde resin may be used as the second adhesive 138 (see Fig. 1b) even if the waterproofing layer 130 comprises a metal or a polymer film, such as an aluminium, polyamine, or polyimide film. The waterproofing layer 130 may comprise the first adhesive 120, which is used also in between the first veneer layer 110a and the second veneer layer 110b. For example, the first adhesive 120 may be used as the second adhesive 138.

As for the term waterproofing layer, one may assume that wetting of the veneer 110a occurs by Fickian diffusion through the waterproofing layer 130. For example, the diffusion coefficient for some polymers that are generally considered water proof are about 3×10⁻¹² m²/s. Preferably, the diffusion coefficient of the waterproofing layer 130 is less than 1×10⁻⁶ m²/s or less than 1×10⁻⁹ m²/s. It is noted that the diffusion coefficient is dependent on temperature, and the given limit refers to normal operating temperature of the panel. The normal operating temperature may be e.g. 30 °C or 20 °C. These values may apply to the waterproofing layer 130 when no protective layer 210 has been applied; to the waterproofing layer 130 after the removal of a the protective layer 210; or to the combination of the waterproofing layer 130 and the protective layer 210.

In an embodiment, the first thickness t₁ (i.e. that of the waterproofing layer 130) is from 50 µm to 1 mm, such as from 50 µm to 700 µm, from 100 µm to 500 µm or from 100 µm to 300 µm. Such a thickness typically provides for a sufficiently waterproof coating.

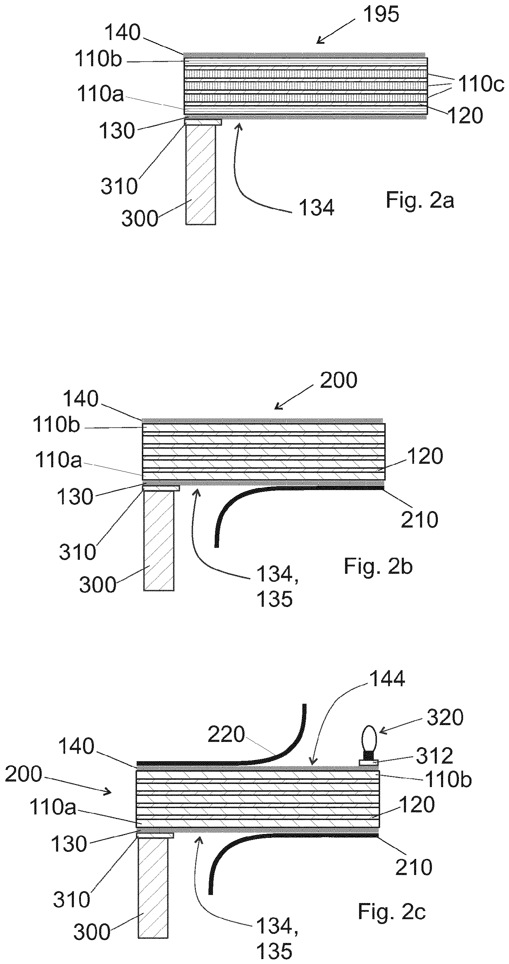

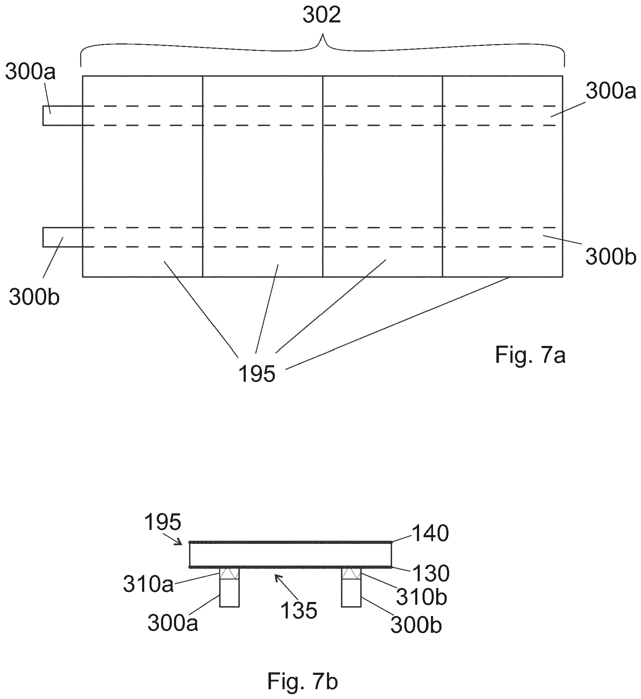

Referring to Fig. 1e, an embodiment of a panel 195, 200 comprises an abrasion resisting layer 140. The abrasion resisting layer 140 is attached to the second veneer layer 110b such that all the veneer layers (110a, 110b, 110c) of the coated plywood panel 195, 200 are arranged in between the abrasion resisting layer 140 and the waterproofing layer 130. The purpose of the abrasion resisting layer 140 is to improve the resistance against abrasion. In addition, the purpose of the abrasion resisting layer 140 is to provide water-proofing also from the other side of the panel 195, 200. Abrasion resistance is important in particular when the panel 195, 200 is applied as a flooring in such a way that the bondable surface 135 faces downwards and is adhesively bonded to an object 300, such as a frame 300a, 300b, as indicated e.g. in Figs. 2a and 7b.

The thickness of the abrasion resisting layer 140 is denoted by t₃ (see Fig. 1c); and is referred to as a third thickness. In an embodiment, the third thickness t₃ is greater than the first thickness t₁. This has the effect that use of materials is diminished. Typically, a waterproofing layer 130 needs not be as thick as an abrasion resisting layer 140. Preferably, a ratio t₃/t₁ of the third thickness t₃ to the first thickness t₁ is at least 2, such as at least 4. This, on one hand improves the abrasion resistance of the layer 140, and at the same time ensures water proofness of the waterproofing layer 130 without significant abrasion resistance of the waterproofing layer 130; since in a typical use, the waterproofing layer 130 need not to be abrasion resistant. The third thickness t₃ may be e.g. at most 3 mm. In an embodiment, the third thickness t₃ is from 100 µm to 4 mm e.g. from 100 µm to 3 mm. In an embodiment, the third thickness t₃ is from 200 µm to 3 mm. A reasonable thick layer is needed in highly abrasive uses. In such application the third thickness may be at least 1 mm, e.g. from 1 mm to 3 mm. However, in some applications, the third thickness may be from 0.1 mm to 0.5 mm, such as from 0.1 mm to 0.2 mm. Such a thickness can be sufficient, provided that the abrasion resisting layer 140 (i.e. the surface 144 thereof) is not subject to excessive wear.

The abrasion resisting layer 140 may comprise at least one of polyurethane, acrylate, epoxy and polyester. In addition or alternatively, the abrasion resisting layer 140 may comprise at least one of polymerized phenol formaldehyde resin, polymerized urea formaldehyde resin, polymerized melamine-urea formaldehyde resin. In addition or alternatively, the abrasion resisting layer 140 may comprise at least one a soya based adhesive and a lignin based adhesive. In addition or alternatively, the abrasion resisting layer 140 may comprise at least one of polyurethane, polyuria, polypropylene, a polyolefin, epoxy, and polyester. Since the abrasion resisting layer 140 may be applied in a hot-press process, preferably the material thereof is selected such than the melting point of the material is at least 140 °C, such as at least 160 °C.

In order to help to keep clean the surface of the abrasion resisting layer 140 and to improve the moisture resistance of the abrasion resisting layer 140, in an embodiment, the abrasion resisting layer 140 comprises hydrophobic material. In an embodiment, the surface energy of the surface of the abrasion resisting layer 140 (optionally after the removal of another protective layer 220) is less than the surface energy of the bondable surface 135; as measured by the standard ISO 8296:2003(E). In an embodiment, an exposed surface 144 of the abrasion resisting layer 140, optionally formed by the removal of a another protective layer 220, has a surface energy of less than 40 mN/m or less than 34 mN/m according to standard ISO 8296:2003(E).

In order to increase friction, the an exposed surface 144 of the abrasion resisting layer 140, optionally formed by the removal of another protective layer 220, comprises patterns formed by indentations and/or projections in order to increase friction and prevent slipping. The height of these patterns may be e.g. at least 50 µm or at least 100 µm, such as from 50 µm to 4000 µm or from 100 µm to 3000 µm. In an embodiment, the abrasion resisting layer 140 comprises polyuria based material and indentations and/or projections preventing slipping.

The material of the abrasion resisting layer 140 may be waterproof. The diffusion constants detailed for the waterproofing layer 130 are applicable also to the abrasion resisting layer 140. The adhesion strength between the abrasion resisting layer 140 and the second veneer layer 110b may be in the limits discussed above for the first adhesion strength σ₁ (see Fig. 1f).

As indicate in Figs. 1e and 2c, when the panel 195, 200 comprises the abrasion resisting layer 140, the panel 195, 200 may comprise another protective layer 220. The other protective layer 220 may be removable from the abrasion resisting layer 140 in a similar way as the protective layer 210 is removable from the waterproofing layer 130. The adhesion strength between the other protective layer 220 and the abrasion resisting layer 140 may be in the limits discussed above for the second adhesion strength σ₂ (see Fig. 1f). The materials and properties discussed (and that will be discussed) for the protective layer 210 are applicable also for the other protective layer 220. As is evident, the other protective layer 220 is arranged on another side of the abrasion resisting layer 140 than all the veneer layers 110.

In an embodiment, at least one veneer layer 110 of the panel 190, 195, 200 comprises hardwood. The term hardwood refers to wood from angiosperm trees, such as birch, beech, cedar, aspen and maple. In an embodiment, at least one veneer layer 110 comprises birch. All the veneer layers 110 may comprise hardwood, such as birch. Harwood is stronger than softwood, whereby the panel 195, 200 comprising hardwood suits well for flooring applications; in particular floorings for trailers or vehicles.

However, as a raw material, softwood is typically cheaper than hardwood. The term softwood refers to wood from coniferous trees, such as spruce, pine, fir, and hemlock. In an embodiment, at least one veneer layer 110 of the panel 200 comprises softwood. In an embodiment, at least one veneer layer 110 of the panel 200 comprises hardwood and at least one other veneer layer 110 of the panel 200 comprises softwood.

In an embodiment, the panel 200 comprises a third veneer layer 110c arranged in between the first veneer layer 110a and the second veneer layer 110b. In an embodiment, the third veneer layer 110 comprises softwood, and at least one of the first veneer layer 110a and the second veneer layer 110b comprises hardwood. In an embodiment, the third veneer layer 110 comprises softwood, the first veneer layer 110a comprises hardwood, and the second veneer layer 110b comprises hardwood. Having hardwood as the topmost and/or bottommost veneer layer improves the durability of the panel, since hardwood is harder than softwood. In particular, when the panel 195, 200 comprises the waterproofing layer 130 and the abrasion resisting layer 140 in such a way that the abrasion resisting layer 140 is closer to the second veneer layer 110b than to the first veneer layer 110a, as indicated in Figs. 2a to 2c, preferably at least the second veneer layer 110b comprises hardwood. This has the technical effect that that the abrasion resisting layer 140 is not easily broken even if the abrasion resisting layer 140 is subjected to high point-like mechanical stress. More preferably also the first veneer layer 110a comprises hardwood, since some mechanical stress may be subjected also to the other side of the panel 195, 200. All the veneer layers (110a, 110b) of the coated plywood panel 195, 200 may comprise hardwood. However, in an embodiment, a veneer layer 110c in between the fist 110a and the second 110b veneer layers comprises softwood.

In an embodiment, the number of veneer layers of the coated plywood panel 195, 200 is at least 12, at least 15, or at least 17. In an embodiment, the number of veneer layers of the coated plywood panel 195, 200 is from 12 to 44, such as from 15 to 35, preferably from 17 to 30, such as 19 to 25. This also ensures suitable strength in flooring applications. In an embodiment, the number of veneer layers is odd. This improves the isotropy of the panel 195, 200. However, the number of veneer layers may be even.

Typically, the veneer layers 110 of the plywood panel 195, 200 are cross laminated. In such a case about 50% of the wood material has a grain orientation in a first direction, and the rest of the wood material has a grain orientation in a second direction, wherein the first direction is perpendicular to the second direction.

However, to improve the bending strength of the panel 195, 200, it is possible to arrange the veneer layers not only cross-wise. For example, in Fig. 2a, all the three middle veneer layers 110c have a first grain direction (as indicated by vertical lines), and both the first 110a and the second 110b veneer layers have a different, second grain orientation (as indicated by horizontal lines). Thus, in an embodiment, at least 60 % of the wood material of the panel 195, 200 has a grain orientation that is parallel to a first direction or forms an angle of at most 30 degrees with the first direction.

It has also been noticed that cracking of the abrasive resisting layer 140 can be reduced, when the grain direction of second veneer layer 110b, which is closest veneer layer to the abrasive resisting layer 140, forms an angle of at least 60 degrees with the first direction, to which most of the wood material is directed. In such a case, the panel may, in use, be oriented in such a way that it best resists bending about an axis that is parallel to the grain direction of the wood of the second veneer layer 110b. When bent about this axis, the grains of the second veneer layer 110b do not tend to protrude out from the panel and crack the surface.

In principle any suitable adhesive can be used as the adhesive 120. Typical low-cost adhesives include phenol formaldehyde, urea formaldehyde, melamine urea formaldehyde, melamine formaldehyde. These adhesives are typically polymerized from a corresponding resin. Correspondingly, a panel 190, 195, 200 comprises corresponding polymerized resin. Correspondingly, an adhesive layer 120 before manufacturing the panel 190, 195, 200 comprises corresponding resin, which is polymerizable e.g. by hot-pressing. Other low cost adhesives include soya based adhesive and lignin based adhesive. Typical high-cost adhesive include polyurethanes, acrylates, epoxies, and polyesters. Preferably, at least one of the low-cost adhesives is used as the adhesive 120.

The coated plywood panel 195 or the coated and protected plywood panel 200 is intended for use with an adhesive 310 (see Figs. 2a and 2b). Correspondingly, if present, at least some of the protective layer 210 is removed in order to expose the bondable surface 135 (as indicated in Fig. 2b). Adhesive 310 (i.e. third adhesive) is applied onto the bondable surface 135 and/or a structure 300. Thereafter, the bondable surface 135 of the panel 195, 200 is attached to the structure 300. As indicated above, because of the surface energy of the bondable surface 135 and/or the roughness of the bondable surface 135, the adhesive bond will be strong. Referring to Figs. 7a and 7b a preferred application is one in which the structure 300a, 300b is a part of a frame of a vehicle or a trailer, whereby the coated panel 195, 200 is used as a part of a flooring 302 of a vehicle or a trailer. As indicated in Fig. 7b, some third adhesive 310a, 310b is arranged in between the bondable surface 135 and the part of the frame 300a, 300b. When a panel 200 is used in a flooring, the whole protective layer 210 may be removed. In the alternative, only a part of the protective layer 210 may be removed. Moreover, the remaining panel (with non or some protective layer) comprises a bondable surface 135, which may have a marking indicative of the removal of at least a part of a protective layer 210.

Referring to Fig. 2c, if some objects, such as fastening equipment 320, such as hooks or rings, need to be adhesively attached to the other side of the panel 195, 200, the other protective layer 220, if present, may be removed to reveal a surface 144 of the abrasion resistive layer 140. Other adhesive 312 may be arranged in between the fastening equipment 320 and the other surface 144.

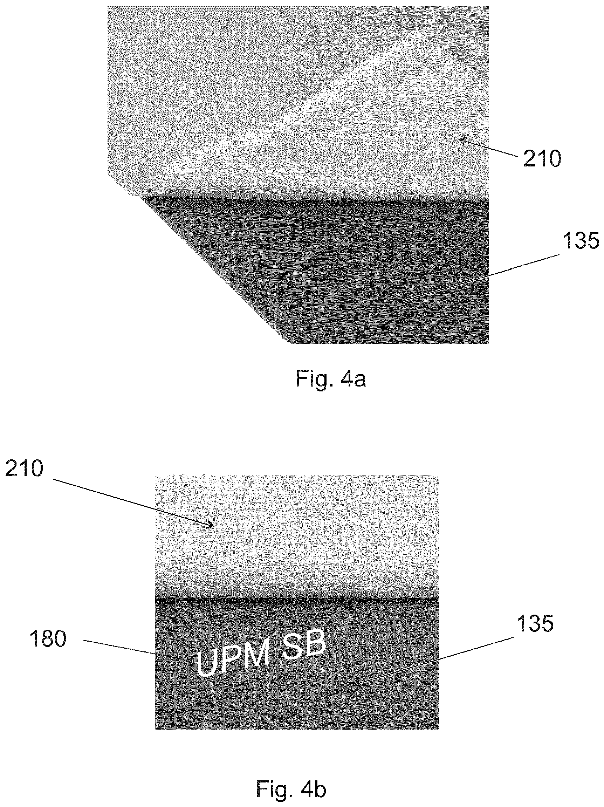

A coated plywood panel 195 may be made by removing the protective layer 210 of a coated and protected plywood panel 200 as disclosed above. The bondable surface 135 may comprise a marking indicative of the removal of a protective layer 210. The bondable surface 135 may comprise a marking indicative of both the removal of a protective layer 210 and the bondability of the bondable surface 135. Moreover, in use, adhesive 310 may be applied on a part of the bondable surface 135, i.e. the second side 134 of the waterproofing layer 130. As an example, the surface 135 in Fig. 4b is equipped with a marking 180 "UPM SB". SB could stand e.g. for a superiorly bondable panel.

Figure 7a shows, as seen from top, a flooring 302 of a trailer or a vehicle. Correspondingly a vehicle or a trailer comprises a frame and a the flooring 302. The frame may comprise e.g. frame beams 300a and 300b. The flooring 302 of the vehicle or trailer comprises a coated plywood panel 195 having a bondable surface 135 with a high surface energy, optionally made by removing the second polymer 210 layer of a coated and protected plywood panel 200 as discussed above. Figure 7b shows, in a side view, the flooring of Fig. 7a. As indicated in Fig. 7b, the vehicle or trailer comprises adhesive 310a, 310b in between a frame beam (300a, 300b, respectively) and a part of the bondable surface 135 that may have been revealed by the removal of the second polymer 210 layer. Preferably, the bondable surface 135 faces downwards in the vehicle or trailer.

Referring to Fig. 6a, an uncoated plywood panel 190 is, in general, manufactured by staking the veneer layers 110 onto each other with adhesive 120 in between the veneer layers 110. Thereafter the stack 190' is hot-pressed to form an uncoated panel 190. Hot pressing is done in a secondary apparatus comprising a secondary first pressing surface 710 and a secondary second pressing surface 720. By these pressing surfaces 710, 720, a pressure p2 and a temperature T2 may be applied to the stack for a time Δt2. A person skilled in the art of plywood manufacturing readily knows suitable conditions. However, as an example the temperature T2 is typically from 125 °C to 135 °C, whereby the adhesive 120 is hardened. The pressing time Δt2 depends on the panel thickness. The pressure p2 typically varies during said hot-pressing such that after an initial maximum pressure, the second pressure p2 diminishes until the end of the hot-pressing.

Referring to Fig. 6b, the uncoated plywood panel 190 may be coated by applying the waterproofing layer 130 onto the uncoated panel 190 in a primary hot-press step. Some adhesive 138 may be applied in between the waterproofing layer 130 and the first veneer layer 110a (i.e. a top veneer layer) of the uncoated panel 190, as indicated in Fig. 1b. However, some materials, such as some thermoplastic polymers and/or resins, attach to plywood in a hot press without a separate adhesive. A stack 195' of the uncoated panel 190 and the waterproofing layer 130 is hot-pressed in a primary apparatus comprising a primary first pressing surface 510 and a primary second pressing surface 520. By these pressing surfaces 510, 520, a pressure p1 and temperature T1 may be applied to the stack for a time Δt1. In this way, the coated panel 195 is obtained.

In an embodiment, the temperature T1 in the primary hot pressing is from 0 °C to 200 °C, the pressure p1 is from 0.001 MPa to 4 MPa, and the time Δt1 is from 0.1 s to 10 h. The temperature T1 and/or pressure p1 may change during the period of time Δt1. In an embodiment, the temperature T1 is in the aforementioned range, the pressure p1 is in the aforementioned range, and the duration of the time period Δt1 is in the aforementioned range. In an embodiment, the pressure p1 is from 0.001 MPa to 1 MPa. This applies e.g. for panels 195 that are made by hardening some resin to form the waterproofing layer 130, wherein the resin hardens in the specified temperature range.

In an embodiment, wherein a temperature curable resin is used to form the waterproofing layer 130, the temperature T1 may be e.g. from 110 °C to 160 °C, such as from 130 °C to 145 °C, such as about 135 °C, or about 140 °C. In addition the pressure p1 may be from 1.5 N/mm² to 2.5 N/mm², such as from 2.0 N/mm² to 2.2 N/mm², such as about 2.1 N/mm². (It is noted that the unit N/mm² equals the unit MPa). In addition, the duration Δt1 of the time period may be from 5 minutes to 8 minutes, such as from 6 minutes to 7 minutes, such as about 7.5 minutes. However, for a much faster process, a higher temperature, e.g. from 190 °C to 200 °C, may be used.

In addition or alternatively, the temperature and the time may be selected such that for a lower temperature T1 a longer time period Δt1 is used. For example, at 200 °C, a time from 25 seconds to 35 seconds may be used. At 130 °C, a time from 7 minutes to 9 minutes may be used. These times are applicable to reasonable thin waterproofing layer 130 (and abrasion resisting layer 140) such as from 0.12 mm to 0.23 mm. In addition, or alternatively, the temperature and the time may be selected such that for a higher temperature T1 a shorter time period Δt1 is used. Moreover, the temperature T1 may affect the adhesion strength between the waterproofing layer 130 and the protective layer 210, when these layers are hot pressed, as will be discussed below.

Other values for duration Δt1 as function of temperature T1 include
- at 125 °C, time is from 200 s to 650 s,
- at 140 °C, time is from 100 s to 350 s,
- at 150 °C, time is from 70 s to 250 s,
- at 160 °C, time is from 50 s to 200 s,
- at 170 °C, time is from 40 s to 90 s, and
- at 180 °C, time is from 35 s to 70 s.

Still further, when the waterproofing layer 130 and/or the abrasion resisting layer 140 are/is thick, a longer time period may be needed. A thick layer may refer to layer thickness of more than 1 mm, e.g. from 1 mm to 2 mm. For example a thick polymer layer may require, at the temperature of 135 degrees, a time of 15 minutes.

One problem, when manufacturing conventional coated plywood panels is that the material (e.g. resin) of the waterproofing layer sticks to the primary first pressing surface 510. In order to avoid this phenomenon, it is conventional to use a lot of release agents together with the resin of the waterproofing layer. Conventionally, the total amount of release agents may be e.g. more than 1.5 wt% or more than 2 wt%. However, as indicated above, use of release agents reduce the surface energy of the waterproofing coating. When the panel is not used for adhesive bonding, this is not a problem; quite the contrary, a low surface energy helps to keep the surface dry and clean. This is in particular true in applications such as concrete forming, where such panels are commonly used.

However, when using a protective layer 210, the protective layer 210 can be used to keep the pressing surface 510 clean, even if the material of the waterproofing layer 130 is substantially free from release agents. Moreover, it has been found that if the protective layer 210 comprises synthetic thermoplastic material, at least some of the release agents, if used, will mix into the protective layer during hot pressing. Therefore, the removal of the protective layer 210 will also remove some of the release agents, thus forming a easily bondable surface 135. As indicated in Fig. 6c, a protective layer 210 can be attached to the coated panel 195. The coated panel 195 and the protective layer 210 are arranged to a stack 200'. By hot-pressing the stack 200' and coated and protected panel 200 is obtained. A third pressure p3 and a third temperature T3 may be applied for a third period Δt3 of time. What has been said about the first pressure p1 applies for the third pressure p3. What has been said about the first temperature T1 applies for the third temperature T3. What has been said about the first period Δt1 applies for the third period Δt3.

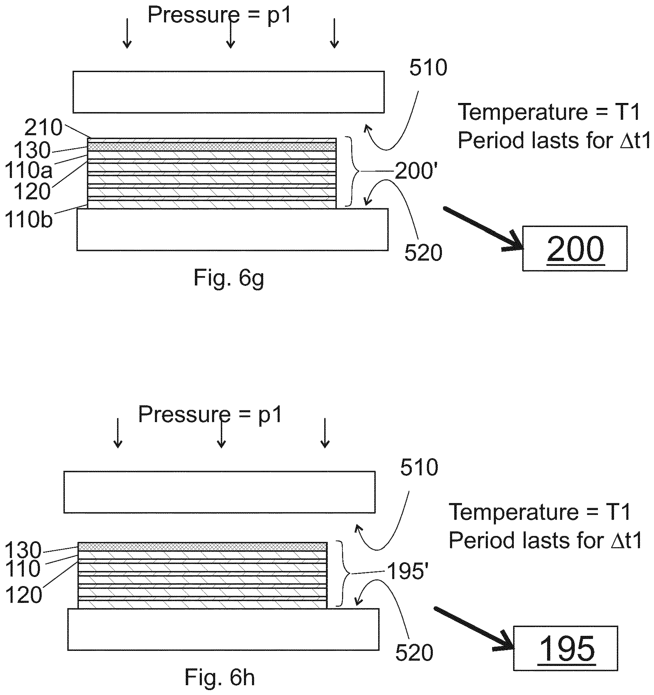

Referring to Figs. 6d and 6e, and 6g it has been found beneficial to apply both the waterproofing layer 130 and the protective layer 210 in the same hot press process. This has the beneficial effect that the protective layer 210 not only protects the bondable surface 135 of the panel 200, but in addition protects the primary first pressing surface 510 from the material of the waterproofing layer. This reduces the need for cleaning the primary first pressing surface 510. In particular, when the material of the waterproofing layer 130 is selected such that the surface energy of the bondable surface 135 is high (as discussed above), the material of the waterproofing layer easily sticks to the primary first pressing surface 510; unless the surface 510 is somehow protected. Thus, a preferable embodiment comprises
- arranging a waterproofing layer 130 on a first veneer 110a and
- arranging a protective layer 210 on the waterproofing layer 130, and thereafter
- hot pressing a stack 200' to form a coated and protected plywood panel 200.

In a particularly beneficial embodiment, a stack 195' comprising veneers 110 and a waterproofing layer 130 is not hot pressed without the protective layer 210. I.e. the a stack 195' comprising veneers 110 and a waterproofing layer 130 is not hot pressed before arranging a protective layer 210 on the waterproofing layer 130.

It has been noticed, that when the protective layer 210 is used, the protective layer 210 helps to keep clean the pressing surface 510 by separating the waterproofing layer 130 from the pressing surface 510. In addition, it has been noticed, that when the protective layer 210 is used, the panel 200 can be removed from the pressing device even if the waterproofing layer is free from or substantially free from release agents. This is because the protective layer 210 prevents the waterproofing layer 130 from adhering to the primary first pressing surface 510. Moreover, if the panel is used primarily for adhesive bonding, instead of e.g. concrete forming, there is no need to apply release agents to the first polymer layer 130. Without such release agents, the surface energy of the bondable surface 135 (see Fig. 1c) is higher than with such release agents. Such high-surface energy panels may comprise a waterproofing layer 130 comprising polymerized resin, such as polymerized phenol formaldehyde resin and at most 1 wt % release agents. Such panels may comprise a waterproofing layer 130 comprising polymerized resin, such as polymerized phenol formaldehyde resin and at most 1 wt % in total waxes (synthetic or natural), stearate (e.g. zinc stearate), esters (e.g. glycol stearate), anionic surfactants (i.e. tensides), and polar materials. In comparison, traditionally more than 1 wt % release agents have been used, as indicated above. However, when the protective layer 210 comprises synthetic thermoplastic material with a melting point of at most 140 °C, at least some of the release agents, if used, will mix into the protective layer 210 during hot pressing. Therefore, the removal of the protective layer 210 will also remove some of the release agents, thus forming a easily bondable surface 135. Preferably, such synthetic thermoplastic material is arranged in a first sub-layer 210a, which is protected by a second sub-layer 210b comprising more heat resistant material such as paper. As indicated above, preferably, the first sub-layer 210a comprises fibrous synthetic thermoplastic material.

However, as indicated above, a protective layer 210 is not always used, in particular, if the panel 195 is only coated, but not protected by the removable protective layer 210 (see Figs. 6b and 6f). In this case, some resin may be used as the adhesive 138 to bond a synthetic polymer or metal film onto the panel. The synthetic polymer film can be formed before hot pressing, while the only the adhesive 138 polymerizes during hot pressing. In such a case, the synthetic polymer or the metal film help to protect the pressing surface 510.

In Fig. 6d, the waterproofing layer 130 is arranged on an uncoated plywood panel 190. The protective layer 210 is arranged on the waterproofing layer 130. Thus, a stack 200' of layers is formed, and by hot pressing the stack 200', a coated and protected plywood panel 200 is obtained. Hot pressing is done in a first pressure p1, first temperature T1 and for a first period of time Δt1. Preferable values for these process parameters have been discussed above.

In Fig. 6e, a patterning plane 514 is arranged in between the primary first pressing surface 510 and the protective layer 210. This can be done to provide patterns onto the surface 214 of the coated and protected plywood panel 200 (see also Fig. 1b). Typically the patterns are reasonably accurately copied via the protective layer 210 also onto the bondable surface 135, which is exposable by removing the protective layer 210. The patterning plane 514 may be a plate or a mesh, as indicated above. As an alternative to a single wire mesh 514, a combination of a flat metal plate and a wire mash can be used as the patterning plane 514.

In the alternative, it seems possible to manufacture the whole protected and coated plywood panel 200 in a single hot press step to attach the veneer layers 110 to each other and the polymer layers 130, 210 to the veneer layers.

As indicated in Fig. 6f, a patterning plane 514 may be used even if a protective layer 210 is not used. A stack 195' for a coated plywood panel is pressed to form the coated plywood panel 195.

Referring to Fig. 6g it is also possible to form the coated and protected panel 200 in a single hot press process, wherein the veneers 110 are attached to each other simultaneously with attaching the waterproofing layer 130 to the first veneer layer 110. Preferably, and as indicated in Fig. 6g, it is also possible to the protective layer 210 to the waterproofing layer at the same time the waterproofing layer is attached to the first veneer layer 110a.

Referring to Fig. 6h it is also possible to form the coated panel 195 in a single hot press process, wherein the veneers 110 are attached to each other simultaneously with attaching the waterproofing layer 130 to the first veneer layer 110.

As indicated in Figs. 6a-6d and 6g-6h, the primary first pressing surface 510 may be substantially even. However, when a protective layer 210 is used, as in Figs. 6c, 6d, and 6g, the protective layer 210 may provide suitable roughness to the bondable surface, as indicated above. In such as case, the second polymer layer may have a structure that increases the roughness of the surface 134. This is achieved e.g. when the protective layer comprises fibrous material, such as fibrous polymer material.

The method of Figs. 6a to 6h comprises arranging available a first veneer layer 110a comprising wood and a second veneer layer 110b comprising wood, and arranging adhesive 120 (i.e. first adhesive 120) in between the first veneer layer 110a and the second veneer layer 110b. The method further comprises attaching a waterproofing layer 130 having a first side 132 and a second side 134 to the first veneer layer 110a such that the first veneer layer 110a and the second veneer layer 110b are arranged on the first side 132 of the waterproofing layer 130. In an embodiment of the method, the second side 134 of the waterproofing layer 130 has a surface energy of at least 34 mN/m according to standard ISO 8296:2003(E). Preferably, the second side 134 of the waterproofing layer 130 has a surface energy of at least 40 mN/m. As indicated in the Figures, the veneer layers 110a, 110b may be arranged as part of an uncoated plywood panel 190.

As for the material of the waterproofing layer 130 of the method, the same materials, as listed above for the panel 195, 200 are used. However, before hot pressing, the waterproofing layer may comprise polymerizable resin impregnated in paper or cardboard, while the panel 195, 200 may comprise polymerized resin obtained by polymerization of the resin. The degree of polymerization needs not be perfect, whereby the panel 195, 200 may also comprise polymerizable resin. In case resin(s) is/are used as the waterproofing layer, preferably the waterproofing layer 130 comprises only a little (e.g. at most 1 wt%) release agents in total, as discussed above. The material of the waterproofing layer 130 may comprise some additive material configured to increase the surface energy of the bondable surface 135; i.e. the surface of the second side 134 of the waterproofing layer 130. As indicated above, the surface energy of the bondable surface 135 may be increased by a treatment, such as corona treatment, flame treatment, ultraviolet treatment, mechanical treatment (e.g. by grinding, rubbing, or sanding), or chemical oxidation.

The protective layer 210 may be attached on the second side 134 of the waterproofing 130 layer before, after, or at the same time the waterproofing layer 130 is attached to the first veneer layer 110a. A protective layer 210 needs not be attached on the second side 134 of the waterproofing 130 layer before, after, or at the same time the waterproofing. As indicated above, preferably, the protective layer 210 is attached on the second side 134 of the waterproofing 130 layer before or at the same time the waterproofing layer 130 is attached to the first veneer layer 110a.

### Experimental

Panels were manufactured as discussed above, and strength of an adhesive bond on the bondable surface 135 was tested. In the tests A to E (see below), a vapour permeable protective layer 210 was removed from the panel 200 to reveal the bondable surface 135 of the panel 195. In a comparative example, the bondable surface 135 was a surface of a phenol coating of a plywood panel, wherein the phenol coating comprised a usual amount of release agents.

In the tests and the comparative example, four stripes of polyurethane based adhesive are bonded onto the bondable surface 135 of the plywood panel 195. First, all the stripes are let to harden for 7 days at a temperature 23 °C and in relative humidity 50 %RH. Then, the adhesion of a first stripe is tested by tearing (i.e. peeling) it away. When the adhesive is pulled, it detaches from the surface 135 at some point, i.e. for sufficiently large force, the adhesive fails. The failure may be a cohesive failure (i.e. the adhesive itself fails, leaving al layer of adhesive onto the surface 135) or an adhesive failure (i.e. the adhesive delaminates from the surface 135). The test is repeated for multiple portions of the stripe. The greater portion of the failures are cohesive failures, the better the adhesion. Thus, a first grade from 1 (worst) to 5 (best) will be awarded for the adhesion of the first stripe. For example, if 100 % of the failures are cohesive failures, a grade of 5 will be awarded; and if 100 % of the failures are adhesive failures, a grade of 1 will be awarded. This, and the other peelings, are performed at room temperature.

Second, the sample with all the remaining three stripes is sunk to a water bath at 20 °C for seven days. The sample is taken out from the bath and let to dry for two hours at room temperature. The aforementioned tearing test is made to the second stripe, and a second grade for the adhesion is awarded.

Third, the sample with both the remaining two stripes is arranged in to an oven (at temperature 90 °C) for seven days. The sample is taken out from the oven and let to cool for two hours at room temperature. The aforementioned test is made to the third stripe, and a third grade for the adhesion is awarded.

Last, the sample with the only remaining stripe is arranged to a controlled environment having a temperature of 40 °C and a relative humidity of 98 %RH for seven days. The sample is taken out from the environment and let to set for two hours at room temperature. The aforementioned test is made to the fourth stripe, i.e. the last remaining stripe, and a fourth grade for the adhesion is awarded. Because all the four stripes are teared, i.e. peeled, off, the test may be referred to a s peel test.

In this way, the quality of the adhesive bond between the adhesive (such as the adhesive 310, see Fig. 2b) and the bondable surface 135 is characterized by the aforementioned four grades of the peel test.

### Comparative example

As a comparative example, for stripes of polyurethane based adhesive were formed onto a plywood panel 195 having a waterproofing layer 130 made of phenol formaldehyde. The average roughness of the bondable surface 135 of the layer 130 was Ra = 1.1 µm. The gloss of the surface was 40. The surface energy of the bondable surface was 36 mN/m. In the aforementioned peel test, the quality of the adhesive bond was 5-1-5-3, i.e. 3.5 on the average.

### Test A

A plywood panel 200 was manufactured such that the waterproofing layer 130 during manufacturing comprised phenol formaldehyde resin and less than 1 wt% release agents. The protective layer 210 comprised polymer fibres. The protective layer 210 comprised a fibrous polymer felt having a specific mass of 60 g/m². The protective layer 210 further comprised a paper sheet such that the polymer felt was arranged in between the paper sheet and the waterproofing layer 130.

The protective layer 210 was attached to the waterproofing layer in the hot press process using only the phenol formaldehyde resin of the waterproofing layer. The temperature in the hot press process, where the layers 130, 210 were attached to each other, was 140 °C.

To test the bondability of the bondable surface 135, the protective layer 210 was removed from the panel 200 and the four stripes of the polyurethane based adhesive were arranged on the bondable surface 135. The average roughness of the bondable surface was Ra = 5.5 µm. The gloss of the surface was 2.2. The surface energy of the surface was more than 44 mN/m. In the aforementioned peel test, the quality of the adhesive bond was 5-5-5-5, i.e. 5 on the average. Most likely, the fibrous polymer material of the protective layer 210 formed sufficient roughness to the surface 135 to improve adhesive bonding.

### Test B

A plywood panel 200 was manufactured such that the waterproofing layer 130 during manufacturing comprised phenol formaldehyde resin and more than 1 wt% release agents. The protective layer 210 comprised synthetic thermoplastic polymer fibres having a melting point of 135 °C. The protective layer 210 further comprised a paper sheet such that the polymer fibres were arranged in between the paper sheet and the waterproofing layer 130. The protective layer 210 was attached to the waterproofing layer 130 in the hot press process using only the phenol formaldehyde resin of the waterproofing layer. The temperature in the hot press process, where the layers 130, 210 were attached to each other, was 140 °C.

To test the bondability of the bondable surface 135, the protective layer 210 was removed from the panel 200 and the four stripes of the polyurethane based adhesive were arranged on the bondable surface 135. The average roughness of the bondable surface was Ra = 4.6 µm. The gloss of the surface was 2.3. The surface energy of the bondable surface was 46 mN/m. In the aforementioned peel test, the quality of the adhesive bond was 5-5-5-5, i.e. 5 on the average. Most likely the fibrous polymer material of the protective layer 210 melted to some extent during the hot-pressing and some of the release agents of the waterproofing layer 130 were mixed to the molten polymer material of the protective layer 210, which increased the surface energy of the bondable surface.

### Test C

A plywood panel 200 was manufactured such that the waterproofing layer 130 during manufacturing comprised phenol formaldehyde resin and less than 1 wt% release agents. The protective layer 210 comprised polymer fibres having a melting point of 135 °C. The protective layer 210 was attached to the waterproofing layer in the hot press process using only the phenol formaldehyde resin of the waterproofing layer. The temperature in the hot press process, where the layers 130, 210 were attached to each other, was 130 °C. Thus, the protective layer 210 did not melt in the hot-press, and no additional layer was needed or used on top of the protective layer 210.

To test the bondability of the bondable surface 135, the protective layer 210 was removed from the panel 200 and the four stripes of the polyurethane based adhesive were arranged on the bondable surface 135. The average roughness of the bondable surface was Ra = 5.8 µm. The gloss of the surface was 2.3. In the aforementioned peel test, the quality of the adhesive bond was 5-5-5-5, i.e. 5 on the average. Most likely, because the waterproofing layer 130 was substantially free from release agents, the adhesion of the somewhat rough surface was good.

### Test D

A plywood panel 200 was manufactured such that the waterproofing layer 130 during manufacturing comprised phenol formaldehyde resin and more than 1 wt% release agents. The protective layer 210 comprised high density polyethylene (HDPE) fibres having a melting point of 135 °C. The protective layer 210 further comprised a siliconized paper sheet such that the HDPE fibres were arranged in between the siliconized paper sheet and the waterproofing layer 130. The protective layer 210 was attached to the waterproofing layer in the hot press process using only the phenol formaldehyde resin of the waterproofing layer. The temperature in the hot press process, where the layers 130, 210 were attached to each other, was 140 °C.

To test the bondability of the bondable surface 135, the protective layer 210 was removed from the panel 200 and the four stripes of the polyurethane based adhesive were arranged on the bondable surface 135. The average roughness of the bondable surface was Ra = 6.1 µm. The gloss of the surface was 1.9. The surface energy of the bondable surface was 44 mN/m. In the aforementioned peel test, the quality of the adhesive bond was 5-5-4-4, i.e. 4.5 on the average. Most likely, the HDPE material of the protective layer 210 melted to some extent during the hot-pressing and some of the release agents of the waterproofing layer 130 were mixed to the molten polymer material of the protective layer 210, which increased the surface energy of the bondable surface. It is not known, whether the slight change in the adhesion, as compared to the test B, is a result of statistical variance, the siliconization of the paper, or some other property.

### Test E

A plywood panel 200 was manufactured such that the waterproofing layer 130 during manufacturing comprised phenol formaldehyde resin without release agents. The protective layer 210 comprised polymer fibres having a melting point of 135 °C. The protective layer 210 further comprised a paper sheet such that the polymer fibres were arranged in between the paper sheet and the waterproofing layer 130. The protective layer 210 was attached to the waterproofing layer in the hot press process using only the phenol formaldehyde resin of the waterproofing layer. The temperature in the hot press process, where the layers 130, 210 were attached to each other, was 140 °C.

To test the bondability of the bondable surface 135, the protective layer 210 was removed from the panel 200 and the four stripes of the polyurethane based adhesive were arranged on the bondable surface 135. The average roughness of the bondable surface was Ra = 6.6 µm. The gloss of the surface was 1.7. In the aforementioned peel test, the quality of the adhesive bond was 5-5-5-5, i.e. 5 on the average. Most likely, because the waterproofing layer 130 was free from release agents, the adhesion of the somewhat rough surface was good.

## Claims

1. A method for manufacturing a coated plywood panel (200), the method comprising
- arranging available a first veneer layer (110a) comprising wood,
- arranging available adhesive (120),
- arranging a second veneer layer (110b) comprising wood, such that at least some of the adhesive (120) is left in between the first veneer layer (110a) and the second veneer layer (110b),
- arranging available a waterproofing layer (130) having a first side (132) and a second side (134),
- attaching the first side (132) of the waterproofing layer (130) to the first veneer layer (110a) such that
• the first veneer layer (110a) is left in between the second veneer layer (110b) and the waterproofing layer (130) and
• a first adhesion strength (σ1) forms between the waterproofing layer (130) and the first veneer layer (110a),
- attaching a protective layer (210) on the second side (134) of the waterproofing layer (130) such that a second adhesion strength (σ2) forms between the protective layer (210) and the waterproofing layer (130), wherein
- the protective layer (210) comprises a vapour permeable or semi-permeable layer (210, 210a) arranged in direct connection with the waterproofing layer (130) and
- the first adhesion strength (σ1) is greater than the second adhesion strength (σ2), whereby the protective layer (210) is removable from the waterproofing layer (130), wherein
- the material of the waterproofing layer (130) comprises resin suitable for polymerization.

2. The method of claim 1, comprising
- treating at least the second side (134) of the waterproofing layer (130) by a treatment that increases the surface energy of the second side (134), such as corona treatment, flame treatment, ultraviolet treatment, chemical oxidation and/or mechanical treatment, wherein
- the second side (134) is treated before, after, or during attaching the first side (132) of the waterproofing layer (130) to the first veneer layer (110a).

3. The method of claim 1 or 2, wherein
- the material of the waterproofing layer (130) comprises phenol formaldehyde resin; optionally arranged in a paper or cardboard substrate.

4. The method of any of the claims 1 to 3,
- wherein the material of the waterproofing layer (130) further comprises at least one of a metal, polyimide, and polyamide, such as polyamide-66 or polyamide-6;
optionally,
- the material of the waterproofing layer (130) further comprises additive material configured to increase the surface energy of the second side (134) of the waterproofing layer (130).

5. The method of any of the claims 1 to 4, wherein
- the second side (134) of the waterproofing layer (130) has a surface energy of at least 34 mN/m measured according to standard ISO 8296:2003(E).

6. A coated plywood panel (200) comprising
- a first veneer layer (110a) comprising wood,
- a second veneer layer (110b) comprising wood,
- adhesive (120) in between the first veneer layer (110a) and the second veneer layer (110b),
- a waterproofing layer (130) comprising polymerized resin and having a first side (132) and a second side (134), the first side (132) being attached to the first veneer layer (110a) by a first adhesion strength (σ1) such that
• the first side (132) faces the first veneer layer (110a) and
• the first veneer layer (110a) is left in between the second veneer layer (110b) and the waterproofing layer (130), and
- a protective layer (210) comprising a vapour permeable or semi-permeable layer (210, 210a), the protective layer (210) attached to the second side (134) of the waterproofing layer (130) by a second adhesion strength (σ2) that is less than the first adhesion strength (σ1) such that the vapour permeable or semi-permeable layer (210, 210a) is arranged in direct connection with the waterproofing layer (130), whereby
- the protective layer (210) is removable from the waterproofing layer (130) such that the removal of the protective layer (210) reveals a bondable surface (135) that has an average surface roughness (Ra) of at least 3 µm as measured according to the standard ISO 4288:1996.

7. The coated plywood panel (200) of claim 6, wherein
- the bondable surface (135) has a surface energy of at least 34 mN/m according to standard ISO 8296:2003(E).

8. The coated plywood panel (200) of the claim 6 or 7, wherein
- the material of the waterproofing layer (130) comprises phenol formaldehyde resin; optionally arranged in a paper or cardboard substrate; optionally,
- the waterproofing layer further comprises at least one of a metal, polyimide, and polyamide, such as polyamide-66 or polyamide-6;
optionally,
- the material of the waterproofing layer (130) further comprises additive material configured to increase the surface energy of the second side of the waterproofing layer (130).

9. The coated plywood panel (200) of any of the claims 6 to 8, comprising
- an abrasion resisting layer (140) attached to the second veneer layer (110b) such that all the veneer layers (110a, 110b) of the coated plywood panel (200) are arranged in between the abrasion resisting layer (140) and the waterproofing layer (130), wherein
- the waterproofing layer (130) has a first thickness (t₁),
- the abrasion resisting layer (140) has a third thickness (t₃), and
- the third thickness (t₃) is greater than the first thickness (ti);
preferably,
- a ratio (t₃/t₁) of the third thickness (t₃) to the first thickness (t₁) is at least 2, such as at least 4.

10. The method of any of the claims 1 to 5 or the coated plywood panel (200) of any of the claims 6 to 9, wherein
- the protective layer (210) is vapour permeable or semi-permeable.

11. The method of any of the claims 1 to 5 or 10, or the coated plywood panel (200) of any of the claims 6 to 10, wherein
- at least one of the first veneer layer (110a) and the second veneer layer (110b) comprises hardwood;
preferably
- the second veneer layer (110b) comprises hardwood;
more preferably
- the first veneer layer (110a) and the second veneer layer (110b) comprise hardwood.

12. The method of any of the claims 1 to 5 or 10 or 11, or the coated plywood panel (200) of any of the claims 6 to 11, wherein
- the protective layer (210) layer has vapour permeability equal to an s_{d} value of at most 5 m according to the standard ISO 12572:2001;
preferably,
- the protective layer (210) layer has vapour permeability equal to an s_{d} value of at most 3 m or at most 1.5 m at the temperature 23 °C according to the standard ISO 12572:2001.

13. The method of any of the claims 1 to 5 or 10 to 12, or the coated plywood panel (200) of any of the claims 6 to 12, wherein
- the protective layer (210) comprises polypropylene and/or polyethylene.

14. The method of any of the claims 1 to 5 or 10 to 13 or the coated plywood panel (200) of any of the claims 6 to 13, wherein
- the protective layer (210) comprises fibres (212), such synthetic polymer fibres and natural fibres.

15. The method of the claim 14, wherein the protective layer (210) comprises
- synthetic polymer fibres (212), such as polyethylene fibres (212) arranged in a first sub-layer (210a); and
- natural fibres arranged in a second sub-layer (210b), such as a sub-layer of paper, optionally treated paper, e.g. siliconized paper.

16. A vehicle or a trailer comprising,
- a frame (3001, 300b) and a flooring (302), the flooring (302) comprising
[A]
- a coated plywood panel (200) of any of the claims 6 to 15, from which only a part of the protective layer (210) has been removed to reveal a bondable surface (135), or
[B]
- a coated plywood panel (200) of any of the claims 6 to 15, from which the whole protective layer (210) has been removed to reveal a bondable surface (135) having a marking (180) indicative of the removal of the protective layer (210);
the vehicle comprising
- third adhesive (310, 310a, 310b) adhered to both the frame (300a, 300b) and the bondable surface (135);
preferably,
- in use of the vehicle or the trailer, the bondable surface (135) faces downwards.

17. Use of the coated plywood panel (200) of any of the claims 6 to 16, the use comprising
- removing at least a part of the protective layer (210) to reveal the bondable surface (135),
- arranging third adhesive (310, 310a, 310b) on the bondable surface (135) and
- bonding the coated plywood panel (195) to an object (300 300a, 300b), such as a frame (300a, 300b) of a vehicle or a trailer, using the third adhesive (310, 310a, 310b).

## Patentansprüche

1. Ein Verfahren zur Herstellung einer beschichteten Sperrholzplatte (200), wobei das Verfahren Folgendes umfasst:
- Bereitstellen einer ersten Furnierschicht (110a), die Holz aufweist,
- Bereitstellen eines Klebstoffes (120),
- Bereitstellen einer zweiten Furnierschicht (110b), die Holz aufweist, so dass mindestens ein Teil des Klebstoffes (120) zwischen der ersten Furnierschicht (110a) und der zweiten Furnierschicht (110b) verbleibt,
- Bereitstellen einer Abdichtungsschicht (130) mit einer ersten Seite (132) und einer zweiten Seite (134),
- Befestigen der ersten Seite (132) der Abdichtungsschicht (130) an der ersten Furnierschicht (110a), so dass
• die erste Furnierschicht (110a) zwischen der zweiten Furnierschicht (110b) und der Abdichtungsschicht (130) verbleibt und
• eine erste Haftfestigkeit (σ1) sich zwischen der Abdichtungsschicht (130) und der ersten Furnierschicht (110a) bildet,
- Befestigen einer Schutzschicht (210) an der zweiten Seite (134) der Abdichtungsschicht (130) derart, dass sich eine zweite Haftfestigkeit (σ2) zwischen der Schutzschicht (210) und der Abdichtungsschicht (130) ausbildet, wobei
- die Schutzschicht (210) eine dampfdurchlässige oder halbdurchlässige Schicht (210, 210a) aufweist, die in direkter Verbindung mit der Abdichtungsschicht (130) angeordnet ist und
- die erste Haftfestigkeit (σ1) größer als die zweite Haftfestigkeit (σ2) ist, wodurch die Schutzschicht (210) von der Abdichtungsschicht (130) entfernbar ist, wobei
- das Material der Abdichtungsschicht (130) für die Polymerisation geeignetes Harz aufweist.

2. Verfahren gemäß Anspruch 1, umfassend:
- Behandeln mindestens der zweiten Seite (134) der Abdichtungsschicht (130) durch eine Behandlung, die die Oberflächenenergie der zweiten Seite (134) erhöht, wie z. B. Koronabehandlung, Beflammen, Ultraviolettbehandlung, chemische Oxidation und/oder mechanische Behandlung, wobei
- die zweite Seite (134) vor, nach oder während des Befestigens der ersten Seite (132) der Abdichtungsschicht (130) an der ersten Furnierschicht (110a) behandelt wird.

3. Verfahren gemäß Anspruch 1 oder 2, wobei
- das Material der Abdichtungsschicht (130) Phenolformaldehydharz aufweist; gegebenenfalls in einem Papier- oder Kartonsubstrat angeordnet.

4. Verfahren gemäß einem der Ansprüche 1 bis 3,
- wobei das Material der Abdichtungsschicht (130) darüber hinaus mindestens eines von einem Metall, Polyimid und Polyamid, wie z. B. Polyamid-66 oder Polyamid-6 aufweist;
gegebenenfalls
- das Material der Abdichtungsschicht (130) ferner ein Zusatzmaterial aufweist, das konfiguriert ist, um die Oberflächenenergie der zweiten Seite (134) der Abdichtungsschicht (130) zu erhöhen.

5. Verfahren gemäß einem der Ansprüche 1 bis 4, wobei
- die zweite Seite (134) der Abdichtungsschicht (130) eine Oberflächenenergie von mindestens 34 mN/m hat, gemessen gemäß der Norm ISO 8296:2003 (E).

6. Eine beschichtete Sperrholzplatte (200), aufweisend
- eine erste Furnierschicht (110a), die Holz aufweist,
- eine zweite Furnierschicht (110b), die Holz aufweist,
- Klebstoff (120) zwischen der ersten Furnierschicht (110a) und der zweiten Furnierschicht (110b),
- eine Abdichtungsschicht (130), die polymerisiertes Harz aufweist und eine erste Seite (132) und eine zweite Seite (134) hat, wobei die erste Seite (132) an der ersten Furnierschicht (110a) mit einer ersten Haftfestigkeit (σ1) befestigt ist, so dass
• die erste Seite (132) der ersten Furnierschicht (110a) zugewandt ist und
• die erste Furnierschicht (110a) zwischen der zweiten Furnierschicht (110b) und der Abdichtungsschicht (130) verbleibt, und
- eine Schutzschicht (210) mit einer dampfdurchlässigen oder halbdurchlässigen Schicht (210, 210a), wobei die Schutzschicht (210) an der zweiten Seite (134) der Abdichtungsschicht (130) durch eine zweite Haftfestigkeit (σ2) befestigt ist, die geringer ist als die erste Haftfestigkeit (σ1), so dass die dampfdurchlässige oder halbdurchlässige Schicht (210, 210a) in direkter Verbindung mit der Abdichtungsschicht (130) angeordnet ist, wobei
- die Schutzschicht (210) von der Abdichtungsschicht (130) entfernbar ist, so dass das Entfernen der Schutzschicht (210) eine verbindbare Oberfläche (135) freigibt, die eine durchschnittliche Oberflächenrauheit (Ra) von mindestens 3 µm wie gemäß der Norm ISO 4288:1996 gemessen hat.

7. Beschichtete Sperrholzplatte (200) gemäß Anspruch 6, wobei
- die verbindbare Oberfläche (135) eine Oberflächenenergie von mindestens 34 mN/m gemäß der Norm ISO 8296:2003(E) hat.

8. Beschichtete Sperrholzplatte (200) gemäß Anspruch 6 oder 7, wobei
- das Material der Abdichtungsschicht (130) Phenolformaldehydharz aufweist; gegebenenfalls in einem Papier- oder Kartonsubstrat angeordnet;
gegebenenfalls
- die Abdichtungsschicht ferner mindestens eines von einem Metall, Polyimid und Polyamid, wie Polyamid-66 oder Polyamid-6 aufweist; gegebenenfalls
- das Material der Abdichtungsschicht (130) ferner ein Zusatzmaterial aufweist, das konfiguriert ist, um die Oberflächenenergie der zweiten Seite (134) der Abdichtungsschicht (130) zu erhöhen.

9. Beschichtete Sperrholzplatte (200) gemäß einem der Ansprüche 6 bis 8, aufweisend:
- eine abriebfeste Schicht (140), die an der zweiten Furnierschicht (110b) derart befestigt ist, dass alle Furnierschichten (110a, 110b) der beschichteten Sperrholzplatte (200) zwischen der abriebfesten Schicht (140) und der Abdichtungsschicht (130) angeordnet sind, wobei
- die Abdichtungsschicht (130) eine erste Dicke (t₁) aufweist,
- die abriebfeste Schicht (140) eine dritte Dicke aufweist (t₃) und
- die dritte Dicke (t₃) größer als die erste Dicke (t₁) ist;
vorzugsweise
- ein Verhältnis (t₃/t₁) der dritten Dicke (t₃) zu der ersten Dicke (t₁) mindestens 2, wie beispielsweise mindestens 4 ist.

10. Verfahren gemäß einem der Ansprüche 1 bis 5 oder beschichtete Sperrholzplatte (200) gemäß einem der Ansprüche 6 bis 9, wobei
- die Schutzschicht (210) dampfdurchlässig oder halbdurchlässig ist.

11. Verfahren gemäß einem der Ansprüche 1 bis 5 oder 10 oder beschichtete Sperrholzplatte (200) gemäß einem der Ansprüche 6 bis 10, wobei
- mindestens eine der ersten Furnierschicht (110a) und der zweiten Furnierschicht (110b) Hartholz aufweist;
vorzugsweise
- die zweite Furnierschicht (110b) Hartholz aufweist;
bevorzugter
- die erste Furnierschicht (110a) und die zweite Furnierschicht (110b) Hartholz aufweisen.

12. Verfahren gemäß einem der Ansprüche 1 bis 5 oder 10 oder 11 oder beschichtete Sperrholzplatte (200) gemäß einem der Ansprüche 6 bis 11, wobei
- die Schutzschicht (210) eine Dampfdurchlässigkeit gleich einem s_{d}-Wert von höchstens 5 m gemäß der Norm ISO 12572:2001 aufweist; vorzugsweise
- die Schutzschicht (210) eine Dampfdurchlässigkeit gleich einem s_{d}-Wert von höchstens 3 m oder höchstens 1,5 m bei einer Temperatur von 23° C gemäß der Norm ISO 12572:2001 aufweist.

13. Verfahren gemäß einem der Ansprüche 1 bis 5 oder 10 bis 12 oder beschichtete Sperrholzplatte (200) gemäß einem der Ansprüche 6 bis 12, wobei
- die Schutzschicht (210) Polypropylen und/oder Polyethylen aufweist.

14. Verfahren gemäß einem der Ansprüche 1 bis 5 oder 10 bis 13 oder beschichtete Sperrholzplatte (200) gemäß einem der Ansprüche 6 bis 13, wobei
- die Schutzschicht (210) Fasern (212) aufweist, wie z. B. synthetische Polymerfasern und natürliche Fasern.

15. Verfahren gemäß Anspruch 14, wobei die Schutzschicht (210) Folgendes aufweist:
- synthetische Polymerfasern (212), wie z. B. Polyethylenfasern (212), die in einer ersten Teilschicht (210a) angeordnet sind; und
- Naturfasern, die in einer zweiten Teilschicht (210b) angeordnet sind, wie z. B. einer Teilschicht aus Papier, gegebenenfalls behandeltem Papier, z. B. silikonisiertes Papier.

16. Ein Fahrzeug oder Anhänger, aufweisend
- einen Rahmen (300a, 300b) und einen Boden (302), der Boden (302) aufweisend
[A]
- eine beschichtete Sperrholzplatte (200) gemäß einem der Ansprüche 6 bis 15, von der nur ein Teil der Schutzschicht (210) entfernt wurde, um eine verbindbare Oberfläche (135) freizulegen, oder
[B]
- eine beschichtete Sperrholzplatte (200) gemäß einem der Ansprüche 6 bis 15, von der die gesamte Schutzschicht (210) entfernt wurde, um eine verbindbare Oberfläche (135) mit einer Markierung (180) freizulegen, die das Entfernen der Schutzschicht (210) anzeigt;
wobei das Fahrzeug aufweist:
- einen dritten Klebstoff (310, 310a, 310b), der sowohl an dem Rahmen (300a, 300b) als auch an der verbindbaren Oberfläche (135) haftet; vorzugsweise
- bei Verwendung des Fahrzeugs oder des Anhängers die verbindbare Oberfläche (135) nach unten weist.

17. Verwendung der beschichteten Sperrholzplatte (200) gemäß einem der Ansprüche 6 bis 16, wobei die Verwendung Folgendes umfasst:
- Entfernen mindestens eines Teils der Schutzschicht (210), um die verbindbare Oberfläche (135) freizulegen,
- Anordnen eines dritten Klebstoffes (310, 310a, 310b) an der verbindbaren Oberfläche (135) und
- Verbinden der beschichteten Sperrholzplatte (195) mit einem Gegenstand (300, 300a, 300b), beispielsweise einem Rahmen (300a, 300b) eines Fahrzeugs oder eines Anhängers, unter Verwendung des dritten Klebstoffes (310, 310a, 310b).

## Revendications

1. Procédé de fabrication d'un panneau de contreplaqué revêtu (200), le procédé comprenant les étapes suivantes :
- mettre à disposition une première couche de placage (110a) comprenant du bois,
- mettre à disposition d'un adhésif (120),
- disposer une seconde couche de placage (110b) comprenant du bois, de manière à laisser au moins une partie de l'adhésif (120) entre la première couche de placage (110a) et la seconde couche de placage (110b),
- mettre à disposition une couche d'imperméabilisation (130) présentant un premier côté (132) et un second côté (134),
- fixer le premier côté (132) de la couche d'imperméabilisation (130) à la première couche de placage (110a) de manière que :
• la première couche de placage (110a) soit laissée entre la seconde couche de placage (110b) et la couche d'imperméabilisation (130) et
• une première force d'adhérence (σ1) se forme entre la couche d'imperméabilisation (130) et la première couche de placage (110a),
- fixer une couche de protection (210) sur le second côté (134) de la couche d'imperméabilisation (130), de manière à former une seconde force d'adhérence (σ2) entre la couche de protection (210) et la couche d'imperméabilisation (130), dans lequel :
- la couche de protection (210) comprend une couche perméable ou semi-perméable à la vapeur (210, 210a) disposée en liaison directe avec la couche d'imperméabilisation (130) et
- la première force d'adhérence (σ1) est supérieure à la seconde force d'adhérence (σ2), d'où il résulte que la couche de protection (210) peut être retirée de la couche d'imperméabilisation (130), dans lequel :
- le matériau de la couche d'imperméabilisation (130) comprend une résine se prêtant à la polymérisation.

2. Procédé selon la revendication 1 comprenant les étapes suivantes :
- traiter au moins le second côté (134) de la couche d'imperméabilisation (130) au moyen d'un traitement qui accroît l'énergie de surface du second côté (134), tel qu'un traitement par effet de couronne, un flammage, un traitement par ultraviolets, une oxydation chimique et/ou un traitement mécanique, dans lequel :
- le second côté (134) est traité avant, après ou pendant la fixation du premier côté (132) de la couche d'imperméabilisation (130) à la première couche de placage (110a).

3. Procédé selon la revendication 1 ou 2, dans lequel :
- le matériau de la couche d'imperméabilisation (130) comprend une résine phénol-formaldéhyde ; éventuellement disposée dans un substrat de papier ou de carton.

4. Procédé selon l'une quelconque des revendications 1 à 3,
- dans lequel le matériau de la couche d'imperméabilisation (130) comprend en outre un métal et/ou un polyimide et/ou un polyamide tel que le polyamide 66 ou le polyamide 6 ;
éventuellement,
- le matériau de la couche d'imperméabilisation (130) comprend en outre un matériau additif conçu pour accroître l'énergie de surface du second côté (134) de la couche d'imperméabilisation (130).

5. Procédé selon l'une quelconque des revendications 1 à 4, dans lequel :
- le second côté (134) de la couche d'imperméabilisation (130) présente une énergie de surface d'au moins 34 mN/m, mesurée selon la norme ISO 8296:2003(E).

6. Panneau de contreplaqué revêtu (200) comprenant :
- une première couche de placage (110a) comprenant du bois,
- une seconde couche de placage (110b) comprenant du bois,
- de l'adhésif (120) entre la première couche de placage (110a) et la seconde couche de placage (110b),
- une couche d'imperméabilisation (130) comprenant une résine polymérisée et présentant un premier côté (132) et un second côté (134), le premier côté (132) étant fixé à la première couche de placage (110a) par une première force d'adhérence (σ1), de manière que :
• le premier côté (132) soit en regard de la première couche de placage (110a) et
• la première couche de placage (110a) soit laissée entre la seconde couche de placage (110b) et la couche d'imperméabilisation (130), et
- une couche de protection (210) comprenant une couche perméable ou semi-perméable à la vapeur (210, 210a), la couche de protection (210) étant fixée au second côté (134) de la couche d'imperméabilisation (130) par une seconde force d'adhérence (σ2) qui est inférieure à la première force d'adhérence (σ1), de manière que la couche perméable ou semi-perméable à la vapeur (210, 210a) soit disposée en liaison directe avec la couche d'imperméabilisation (130), d'où il résulte que :
- la couche de protection (210) peut être retirée de la couche d'imperméabilisation (130), de manière que le retrait de la couche de protection (210) laisse apparaître une surface pouvant être collée (135) qui possède une rugosité moyenne de surface (Ra) d'au moins 3 µm, telle que mesurée selon la norme ISO 4288:1996.

7. Panneau de contreplaqué revêtu (200) selon la revendication 6, dans lequel :
- la surface pouvant être collée (135) présente une énergie de surface d'au moins 34 mN/m selon la norme ISO 8296:2003(E).

8. Panneau de contreplaqué revêtu (200) selon la revendication 6 ou 7, dans lequel :
- le matériau de la couche d'imperméabilisation (130) comprend une résine phénol-formaldéhyde ; éventuellement disposée dans un substrat de papier ou de carton ;
éventuellement,
- la couche d'imperméabilisation comprend en outre un métal et/ou un polyimide et/ou un polyamide tel que le polyamide 66 ou le polyamide 6 ;
éventuellement,
- le matériau de la couche d'imperméabilisation (130) comprend en outre un matériau additif conçu pour accroître l'énergie de surface du second côté de la couche d'imperméabilisation (130).

9. Panneau de contreplaqué revêtu (200) selon l'une quelconque des revendications 6 à 8, comprenant :
- une couche résistant à l'abrasion (140) fixée à la seconde couche de placage (110b) de manière que toutes les couches de placage (110a, 110b) du panneau de contreplaqué revêtu (200) soient disposées entre la couche résistant à l'abrasion (140) et la couche d'imperméabilisation (130), dans lequel :
- la couche d'imperméabilisation (130) présente une première épaisseur (t₁),
- la couche résistant à l'abrasion (140) présente une troisième épaisseur (t₃), et
- la troisième épaisseur (t₃) est supérieure à la première épaisseur (t₁) ; de préférence,
- un rapport (t₃/t₁) de la troisième épaisseur (t₃) à la première épaisseur (t₁) est d'au moins 2, tel que d'au moins 4.

10. Procédé selon l'une quelconque des revendications 1 à 5 ou panneau de contreplaqué revêtu (200) selon l'une quelconque des revendications 6 à 9, dans lequel :
- la couche de protection (210) est perméable ou semi-perméable à la vapeur.

11. Procédé selon l'une quelconque des revendications 1 à 5 ou 10, ou panneau de contreplaqué revêtu (200) selon l'une quelconque des revendications 6 à 10, dans lequel :
- au moins l'une de la première couche de placage (110a) et de la seconde couche de placage (110b) comprend du bois dur ;
de préférence,
- la seconde couche de placage (110b) comprend du bois dur ;
de préférence encore,
- la première couche de placage (110a) et la seconde couche de placage (110b) comprennent du bois dur.

12. Procédé selon l'une quelconque des revendications 1 à 5 ou 10 ou 11, ou panneau de contreplaqué revêtu (200) selon l'une quelconque des revendications 6 à 11, dans lequel :
- la couche de protection (210) possède une perméabilité à la vapeur égale à une valeur s_{d} inférieure ou égale à 5 m selon la norme ISO 12572:2001 ;
de préférence,
- la couche de protection (210) possède une perméabilité à la vapeur égale à une valeur s_{d} inférieure ou égale à 3 m ou inférieure ou égale à 1,5 m à la température de 23 °C selon la norme ISO 12572:2001.

13. Procédé selon l'une quelconque des revendications 1 à 5 ou 10 à 12, ou panneau de contreplaqué revêtu (200) selon l'une quelconque des revendications 6 à 12, dans lequel :
- la couche de protection (210) comprend du polypropylène et/ou du polyéthylène.

14. Procédé selon l'une quelconque des revendications 1 à 5 ou 10 à 13, ou panneau de contreplaqué revêtu (200) selon l'une quelconque des revendications 6 à 13, dans lequel :
- la couche de protection (210) comprend des fibres (212), telles que des fibres de polymère synthétique et des fibres naturelles.

15. Procédé selon la revendication 14, dans lequel la couche de protection (210) comprend :
- des fibres de polymère synthétique (212), telles que des fibres de polyéthylène (212) disposées en une première sous-couche (210a) ; et
- des fibres naturelles disposées en une seconde sous-couche (210b), telle qu'une sous-couche de papier, éventuellement de papier traité, par exemple de papier siliconé.

16. Véhicule ou remorque comprenant :
- un châssis (300a, 300b) et un plancher (302), le plancher (302) comprenant :
[A]
- un panneau de contreplaqué revêtu (200) selon l'une quelconque des revendications 6 à 15, dont une partie seulement de la couche de protection (210) a été retirée pour laisser apparaître une surface pouvant être collée (135), ou
[B]
- un panneau de contreplaqué revêtu (200) selon l'une quelconque des revendications 6 à 15, dont toute la couche de protection (210) a été retirée pour laisser apparaître une surface pouvant être collée (135) présentant un marquage (180) indiquant le retrait de la couche de protection (210) ;
le véhicule comprenant :
- un troisième adhésif (310, 310a, 310b) adhérant à la fois au châssis (300a, 300b) et à la surface pouvant être collée (135) ;
de préférence,
- en cours d'utilisation du véhicule ou de la remorque, la surface pouvant être collée (135) est tournée vers le bas.

17. Utilisation du panneau de contreplaqué revêtu (200) selon l'une quelconque des revendications 6 à 16, l'utilisation comprenant les étapes suivantes :
- retirer au moins une partie de la couche de protection (210) pour laisser apparaître la surface pouvant être collée (135),
- disposer le troisième adhésif (310, 310a, 310b) sur la surface pouvant être collée (135) et
- coller le panneau de contreplaqué revêtu (195) à un objet (300, 300a, 300b), tel qu'un châssis (300a, 300b) de véhicule ou de remorque, à l'aide du troisième adhésif (310, 310a, 310b).
